# EUROPÄISCHE PATENTSCHRIFT

(11) **EP 1 893 521 B1**
(45) Veröffentlichungstag und Bekanntmachung des Hinweises auf die Patenterteilung: **26.01.2011**
(21) Anmeldenummer: 06742410.1
(22) Anmeldetag: 07.06.2006
(51) Int. Cl.: B67C 3/00

(54) **AIRBAGMODUL FÜR EIN KRAFTFAHRZEUG**
AIRBAG MODULE FOR A MOTOR VEHICLE
MODULE AIRBAG POUR UN VEHICULE AUTOMOBILE

(30) Priorität: 10.06.2005 DE 102005027910; 15.12.2005 DE 202005020680 U; 15.12.2005 DE 202005020687 U; 16.03.2006 DE 102006013359
(43) Veröffentlichungstag der Anmeldung: 05.03.2008
(73) Patentinhaber: Takata-Petri AG, 63743 Aschaffenburg (DE)
(72) Erfinder: LUBE, Thomas, 12589 Berlin (DE); PRADEL, Andreas, 10318 Berlin (DE)
(74) Vertreter: Baumgärtel, Gunnar
(86) Internationale Anmeldenummer: PCT/DE2006/001006
(87) Internationale Veröffentlichungsnummer: WO 2006/131112

(56) Entgegenhaltungen:
- WO-A-02/08025
- WO-A-03/104046
- WO-A-2004/094201
- DE-A1- 4 016 046
- DE-A1- 10 139 626
- DE-A1- 10 205 699
- DE-A1- 19 810 537
- US-A- 5 799 974
- US-A1- 2001 045 734
- US-A1- 2003 025 309

## Beschreibung

Die Erfindung betrifft ein Airbagmodul für ein Kraftfahrzeug gemäß dem Anspruch 1.

Ein derartiges Airbagmodul umfasst einen Gassack, der zum Schutz eines Insassen mit Gas aufblasbar ist und sich beim Entfalten entlang einer Hauptentfaltungsrichtung auf den zu schützenden Insassen zu bewegt, eine Einströmöffnung des Gassackes, durch die hindurch Gas zum Aufblasen des Gassackes in den Gassack eingeleitet werden kann, sowie einen eine Fläche aufspannenden umlaufenden Randbereich der Einströmöffnung. Bei der Fläche handelt es sich dabei um eine fiktive Fläche, die zur Charakterisierung der Lage des Randbereiches im Raum dient. Weiterhin weist ein solches Airbagmodul einen Gasgenerator auf, mit dem das Gas zum Aufblasen des Gassackes erzeugbar ist, wobei dieses aus mindestens einer Gasaustrittsöffnung des Gasgenerators austritt und durch die Einströmöffnung in den Gassack eingeleitet wird. Der Gasgenerator ist an einem Boden eines Generatorträgers befestigt, wobei der Boden sich entlang der Fläche erstreckt und einen Innenraum des Airbagmoduls entgegen der Hauptentfaltungsrichtung von einem das Airbagmodul umgebenden Außenraum trennt. Unter der Hauptentfaltungsrichtung eines Gassackes wird hierbei diejenige Richtung verstanden, entlang der der Gassack beim Entfalten gegen eine dem Gassack abdeckende Abdeckung drückt, so dass diese geöffnet wird und der Gassack sich entlang der Hauptentfaltungsrichtung in einen das Airbagmodul umgebenden Außenraum entfalten kann. Bei einem Fahrerairbag beispielsweise fällt die Hauptentfaltungsrichtung für gewöhnlich mit der Lenkachse des Lenkrades zusammen.

Ein Airbagmodul entsprechand der Präambel des Auspruchs 1 Art ist beispielsweise aus der US-A 5,799,974 bekannt.

Der Erfindung liegt das Problem zugrunde, ein Airbagmodul der eingangs genannten Art bereitzustellen, das bei einem einfachen und kostengünstigen Aufbau hinsichtlich seiner Ausstattung leicht zu variieren ist.

Dieses Problem wird durch ein Airbagmodul mit den Merkmalen des Anspruchs 1 gelöst.

Danach ist zum Einen vorgesehen, dass die durch den Randbereich der Einströmöffnung aufgespannte Fläche entlang der Hauptentfaltungsrichtung H vom Boden des Generatorträgers beabstandet ist.

Hierdurch wird das erfindungsgemäße Problem auf vorteilhafte Weise gelöst, da aufgrund der Beabstandung zwischen dem Randbereich der Einströmöffnung des Gassackes und dem Boden des Generatorträgers entlang der Hauptentfaltungsrichtung ein Bauraum geschaffen wird, in dem Funktionskomponenten des Airbagmoduls in Form von Distanzstücken austauschbar angeordnet werden können, die die Strecke vom Boden bis zum Randbereich der Einströmöffnung entlang der Hauptentfaltungsrichtung überbrücken. Bei einer derartigen Funktionskomponente kann es sich beispielsweise um eine Wandung mit steuerbaren Abströmöffnungen handeln, durch die hindurch der Gassack (steuerbar) entlüftet werden kann.

Dabei steht (senkrecht) vom Boden eine Wandung entlang der Hauptentfaltungsrichtung des Gassackes ab, die quer zur Hauptentfaltungsrichtung umläuft, wobei die Wandung bevorzugt einen dem Randbereich der Einströmöffnung entlang der Hauptentfaltungsrichtung zugewandten Randbereich aufweist, der vorzugsweise zur flächigen Anlage an den Randbereich der Einströmöffnung ausgebildet ist. Hierbei kann der Randbereich der Wandung deckungsgleich mit dem Randbereich der Einströmöffnung des Gassackes ausgebildet sein und formschlüssig am Randbereich der Einströmöffnung des Gassackes anliegen. Die fiktive Fläche F, die vom Randbereich der Einströmöffnung aufgespannt wird, bildet vorzugsweise eine Ebene aus, wobei der Boden des Generatorträgers bevorzugt parallel zu dieser Ebene verläuft. Vorzugsweise ist der Gassack über den Randbereich der Einströmöffnung an einer Komponente des Airbagmoduls festgelegt, und zwar bevorzugt am Randbereich der Wandung.

In einer Variante der Erfindung weist der Boden des Generatorträgers eine Gasgeneratoraussparung zur Aufnahme des Gasgenerators auf. Hierbei kann der Gasgenerator derart in der Gasgeneratoraussparung des Bodens angeordnet sein, dass ein die Gasgeneratoraussparung berandender Randbereich des Bodens den Gasgenerator im Querschnitt umgreift. Alternativ kann der Gasgenerator durch die Gasgeneratoraussparung hindurch entlang der Hauptentfaltungsrichtung vollständig in den Generatorträger eingeführt sein.

In einer weiteren Variante der Erfindung umläuft die Wandung die Gasgeneratoraussparung des Bodens des Generatorträgers quer zur Hauptentfaltungsrichtung. Bevorzugt ist die Wandung hierbei hohlzylinderförmig ausgebildet. Der Randbereich der Wandung wird hierbei vorzugsweise durch eine dem Gassack zugewandte Stirnseite der hohlzylinderförmigen Wandung gebildet, d.h., der Randbereich der Wandung ist flächig ringförmig ausgebildet.

Es ist der Randbereich der Einströmöffnung am Randbereich der Wandung festgelegt, so dass Gas entlang der Wandung durch die Einströmöffnung hindurch in den Gassack strömen kann. Bevorzugt liegt der Randbereich der Einströmöffnung flächig am Randbereich der Wandung an.

Nach der Erfindung ist weiter vorgesehen, dass die Wandung zumindest eine erste Abströmöffnung aufweist, durch die hindurch beim Aufblasen des Gassackes das von dem Gasgenerator erzeugte Gas entweder unmittelbar vor dem Einströmen in den Gassack oder nach dessen Verlassen in den Außenraum des Airbagmoduls gelangen kann. Die Abströmöffnung dient also zum (steuerbaren) Be- und Entlüften des Gassackes.

Ferner ist eine Abdeckung des Airbagmoduls vorgesehen, die den Gassack überdeckt und einen Innenraum des Airbagmoduls von einem das Airbagmodui umgebenden Außenraum trennt. Bei einem Fahrerairbagmodul zur Anordnung in einem Lenkrad, kann es sich bei einer derartigen Abdeckung beispielsweise um einen Teil eines Nabenkörpers des Lenkrades handeln. Eine solche Abdeckung weist vorzugsweise einen öffenbaren Bereich auf, durch den hindurch der Gassack in den Außenraum des Airbagmoduls entfaltbar ist. Der öffenbare Bereich kann beispielsweise Aufreißlinien aufweisen, entlang der der öffenbare Bereich der Abdeckung durch den sich entfaltenden Gassack, der beim Aufblasen entlang der Hauptentfaltungsrichtung gegen die Abdeckung drückt, aufreißt.

Dabei ist die erste Abströmöffnung derart im Innenraum des Airbagmoduls angeordnet, dass aus ihr entweichendes Gas durch den öffenbaren Bereich hindurch in den Außenraum gelangen kann. Eine Verletzungsgefahr für eine Person (z.B. für einen Fahrer im Falle eines Fahrerairbagmoduls) besteht hierbei nicht, da der öffenbare Bereich durch den sich entfaltenden Gassack (bzw. den bereits entfalteten Gassack) abgedeckt wird. Zusätzlich besteht beispielsweise bei einem Fahrerairbag Designfreiheit hinsichtlich einer dem Fahrer abgewandten Seite der Lenksäule bzw. des Lenkrades, da diese bei einem Abströmen von Gas durch einen in Richtung eines Fahrers geöffneten Bereich einer Abdeckung des Airbagmoduls nicht strömungsoptimiert bzw. hitzebeständig aufgebaut werden muss.

Gemäß der Erfindung ist ein bewegbares Element mit einer Aussparung entlang einer die Wandung des Generatorträgers umlaufenden Bewegungsrichtung verschiebbar an der Wandung gelagert. Dabei ist die Aussparung zum Öffnen der ersten Abströmöffnung durch ein Verschieben des bewegbaren Elementes entlang der Bewegungsrichtung mit der ersten Abströmöffnung in Deckung bringbar. Ebenso kann das bewegbare Element derart entlang der Bewegungsrichtung verschoben werden, dass die Aussparung des bewegbaren Elementes sich vollständig außer Deckung mit der ersten Abströmöffnung der Wandung befindet, so dass diese durch das bewegbare Element verschlossen ist. Vorteilhaft ist das bewegbare Element als ein entlang der Bewegungsrichtung umlaufender zylindrischer Ring ausgebildet, der vorzugsweise an einer dem Außenraum abgewandten Innenseite der hohlzylindrisch ausgebildeten Wandung anliegt. Die am Ring ausgebildete durchgängige Aussparung kann die Form und Größe der an der Wandung ausgebildeten ersten Abströmöffnung aufweisen. Bei einer Mehrzahl von ersten Abströmöffnungen, die entlang der Bewegungsrichtung an der zylindrischen Wandung ausgebildet sein können, weist der zylindrische Ring eine entsprechende Mehrzahl von Aussparungen auf, die durch ein Verschieben des Ringes entlang der Bewegungsrichtung mit den ersten Abströmöffnungen der Wandung in Deckung bzw. außer Deckung bringbar sind. Unter einem Verschieben des Ringes wird hierbei eine Rotation des zylindrischen Ringes um seine Zylinderachse verstanden, d.h., der Ring kann an der Wandung anliegen und gegen die Wandung verdreht werden. Allerdings ist eine Translation des Ringes zum Öffnen bzw. Verschließen der ersten Abströmöffnungen nicht ausgeschlossen und ebenso möglich (auch in Kombination mit einer Rotation).

Die Aussparung (oder die Aussparungen) des Ringes sind derart am Ring ausgebildet, dass der Ring bezüglich der Wandung des Generatorträgers in eine Position dreh- bzw. schiebbar ist, in der der Ring die erste Abströmöffnung (oder die Mehrzahl an ersten Abströmöffnungen) vollständig verschließt. Ebenso können die Aussparungen derart am Ring angeordnet sein, dass in einer bestimmten Position des Ringes bezüglich der Wandung sämtliche erste Abströmöffnungen der Wandung geöffnet sind.

Besonders bevorzugt weist der Ring zum Verschieben des Ringes entlang der Bewegungsrichtung einer Ausnehmung mit einem quer zur Bewegungsrichtung erstreckten Rand auf (bei einer hohlzylindrischen Wandung umläuft die Bewegungsrichtung die zylindrische Wandung quer zur Hauptentfaltungsrichtung des Gassackes, d.h., quer zur Zylinderachse der hohlzylindrischen Wandung). In einer Variante der Erfindung ist diese Ausnehmung als ein den Ring unterbrechender Spalt ausgebildet (offener Ring), der sich quer zur Bewegungsrichtung erstreckt.

Vorzugsweise drückt zum Verschieben des Rings ein Kolben einer Bewegungserzeugungsvorrichtung entlang der Bewegungsrichtung gegen den Rand der Ausnehmung, so dass der Ring durch den Kolben aus einer anfänglichen Position, in der die erste Abströmöffnung durch den Ring verschlossen ist, in eine weitere Position bewegt wird, in der die erste Abströmöffnung geöffnet ist. Durch diese vorteilhafte tangentiale Krafteinleitung wird der Ring nur gering deformiert. Zur Verstärkung des Ringes kann die Ausnehmung nur partiell am Ring ausgebildet sein, so dass der Ring senkrecht zur Bewegungsrichtung nicht vollständig durchtrennt ist. In diesem Fall ist weiterhin bevorzugt eine schmale, den Ring quer zur Bewegungsrichtung durchtrennende weitere Ausnehmung vorgesehen, die in der Bewegungsrichtung hinter dem Rand der Ausnehmung ausgebildet ist und entlang dieses Randes, d.h. quer zur Bewegungsrichtung, verläuft. Drückt nun der Kolben der Bewegungserzeugungsvorrichtung entlang der Bewegungsrichtung gegen den Rand der Ausnehmung, so wird der Ring aufgrund der weiteren Ausnehmung nicht entlang der Bewegungsrichtung geschoben, sondern gezogen, was eine weitere Minimierung einer durch die Kolbeneinwirkung verursachten Deformation des Ringes bedingt.

Aufgrund der vorstehenden Minimierung der Deformation des Ringes, kann dieser besonders leicht ausgebildet werden (geringe Wandstärke). Weiterhin kann die Aussparung des Ringes, die zum Öffnen der ersten Abströmöffnung mit der ersten Abströmöffnung in Deckung bringbar ist, infolge der Minimierung der Deformation des Ringes besonders großflächig ausfallen. Die Aussparung (oder die Aussparungen) kann daher etwa die Hälfte einer der Wandung zugewandten Fläche des Ringes einnehmen.

In einer nicht zur Erfindung schövenden Ausführungsform sind in der senkrecht vom Boden des Generatorträgers abstehenden Wandung keine Abströmöffnungen vorgesehen, d.h., die Wandung ist entlang des Bodens des Generatorträgers durchgängig und daher gasundurchlässig ausgebildet. Eine Variante der Erfindung sieht vor, dass die Wandung einstückig mit dem Boden des Generatorträgers verbunden ist. Hierbei kann die Wandung auch derart mit dem Generatorträger verbunden sein, dass sie nur unter Zerstörung einer (nicht reversibel lösbaren) Verbindung mit dem Generatorträger vom Generatorträger abgelöst werden kann.

In einer alternativen Ausführungsform der Erfindung ist vorgesehen, dass die Wandung ein lösbar (reversibel) am Generatorträger befestigbares Untermodul bzw. ein Teil eines solchen Untermoduls bildet. In einer Variante der Erfindung umfasst das Untermodul :: neben der Wandung bevorzugt auch die Bewegungserzeugungsvorrichtung und/oder das bewegbare Element, das zum Verschließen bzw. Öffnen der ersten Abströmöffnungen mit der Bewegungserzeugungsvorrichtung zusammenwirkt.

Dadurch, dass die Wandung entlang der Hauptentfaltungsrichtung des Gassackes lösbar am Generatorträger zwischen dem Boden des Generatorträgers und dem Randbereich der Einströmöffnung des Gassackes festlegbar ist, kann mit Vorteil eine Normalausführung des Airbagmoduls, bei der die Wandung keine Abströmöffnungen aufweist und als ein rohr- bzw. hohlzylinderförmiges Distanzstück die Strecke entlang der Hauptentfaltungsrichtung zwischen dem Randbereich der Einströmöffnung des Gassackes und dem Boden des Generatorträgers überbrückt, kostengünstig mit einem geregelten Abströmmechanismus nachgerüstet werden. Hierzu wird die durchgängige Wandung ohne erste Abströmöffnungen (Distanzstück) aus dem Airbagmodul herausgenommen und durch eine Wandung mit ersten Abströmöffnungen ersetzt. Letztere Variante der Wandung ist bevorzugt mit einem vollständig funktionsfähigen (vorprüfbaren) Regelmechanismus zum Steuern der ersten Abströmöffnungen, bestehend aus zumindest dem an der Wandung gelagerten Ring und der mit dem Ring gekoppelten Bewegungserzeugungsvorrichtung, ausgestattet. Beim Nachrüsten wird somit im Ergebnis ein kompletter Austausch des Generatorträgers mit Vorteil vermieden.

Bei den vorstehenden Ausführungsformen der Erfindung wird bevorzugt der Randbereich der Einströmöffnung des Gassackes mittels eines Klemmringes am Randbereich der Wandung lösbar festgelegt. Dabei weist der Klemmring bevorzugt zumindest ein entgegen der Hauptentfaltungsrichtung abragendes Befestigungselement auf, das entlang der Hauptentfaltungsrichtung zunächst durch eine Aussparung des Randbereiches der Einströmöffnung des Gassackes und sodann durch eine mit dieser Aussparung fluchtende Durchgangsöffnung der Wandung sowie ein sich an diese Durchgangsöffnung anschließendes und mit der Durchgangsöffnung fluchtendes Loch im Boden des Generatorträgers geführt ist. Hierbei steht ein freier Endabschnitt des Befestigungselementes entgegen der Hauptentfaltungsrichtung vom Boden des Generatorträgers ab. Dieser freie Endabschnitt durchgreift vorzugsweise eine an einem Flansch des Gasgenerators ausgebildete Aussparung, so dass der Gasgenerator durch ein Verschrauben des freien Endabschnittes des Befestigungselementes mit einer Mutter am Boden des Generatorträgers festlegbar ist. Dabei drückt der Klemmring, von dem das Befestigungselement entgegen der Hauptentfaltungsrichtung des Gassackes absteht, entlang der Hauptentfaltungsrichtung gegen den Randbereich der Einströmöffnung des Gassackes, so dass dieser entlang der Hauptentfaltungsrichtung des Gassackes zwischen dem Klemmring und dem Randbereich der Wandung eingespannt wird. Für den Fall, dass die Wandung separat zum Boden des Generatorträgers ausgebildet ist, dient das Befestigungselement nach dem Verschrauben mit der dem Befestigungselement zugeordneten Mutter auch zum Befestigen der Wandung am Boden des Generatorträgers. Der Flansch des Gasgenerators, über den der Gasgenerator bevorzugt an der Gasgeneratoraussparung des Bodens des Generatorträgers festgelegt ist, umläuft den Gasgenerator bevorzugt im Querschnitt ringförmig und ist vorzugsweise zur flächigen Anlage an einem die Gasgeneratoraussparung umlaufenden Randbereich des Bodens des Generatorträgers eingerichtet und vorgesehen.

In einer weiteren Variante der Erfindung weist der Gassack eine zweite Abströmöffnung (oder eine Mehrzahl zweiter Abströmöffnungen) auf, durch die hindurch Gas aus dem Gassack in den das Airbagmodul umgebenden Außenraum entweichen kann. Hierbei ist die zumindest eine zweite Abströmöffnung in einem aufgeblasenen Zustand des Gassackes derart im Innenraum des Airbagmoduls, angeordnet, dass aus der zweiten Abströmöffnung austretendes Gas durch den öffenbaren Bereich der Abdeckung des Airbagmoduls hindurch in den das Airbagmodul umgebenden Außenraum gelangen kann.

Dies ist vorteilhaft, da in einer oop-Situation, d.h., der Gassack ist früh verblockt, aufgrund des hohen Gasdrucks im Innenraum des Airbagmoduls ein gutes Ventilieren durch solche zweiten Abströmöffnungen möglich ist, so dass die Belastungen auf den Fahrer in einer frühen Phase der Entfaltung des Gassackes reduziert werden.

Diesbezüglich sind in einer Variante der Erfindung Mittel vorgesehen, die dazu eingerichtet und vorgesehen sind, zu verhindern, dass aus den ersten und zweiten Abströmöffnungen austretendes Gas entgegengesetzt zur Hauptentfaltungsrichtung strömen kann.

In einer weiteren Variante der Erfindung weist der Gassack zum Ablassen von Gas eine dritte Abströmöffnung auf, die bei einem entfalteten Gassack im Außenraum des Airbagmoduls angeordnet ist. Derartige dritte Abströmöffnungen sind vorteilhaft, da sie ein zuverlässiges Entlüften des stehenden, d.h., bereits entfalteten Gassackes, ermöglichen.

Vorzugsweise ist die dritte Abströmöffnung im aufgeblasenen Zustand des Gassackes an einer dem Airbagmodul zugewandten Seite, d.h., an einer dem Fahrer abgewandten Seite des Gassackes angeordnet, so dass aus dem Gassack strömende Gase nicht direkt bzw. unverwirbelt auf den Fahrer bzw. eine durch den Gassack zu schützende Person gerichtet sind.

Bevorzugt ist eine weitere dritte Abströmöffnung vorgesehen, die zum Ablassen von Gas dient und bei einem entfalteten Gassack im Außenraum des Airbagmoduls angeordnet ist. Hierbei liegt die weitere dritte Abströmöffnung vorzugsweise im aufgeblasenen Zustand des Gassackes quer zur Hauptentfaltungsrichtung des Gassackes der dritten Abströmöffnung gegenüber, so dass beispielsweise bei einem symmetrisch aufgebauten Fahrerairbag ein möglichst symmetrisches Gasabstrahlverhalten bewirkt wird und der Gassack (räumlich) gleichmäßig entlüftet werden kann.

Mit Vorteil können die ersten, zweiten und dritten Abströmöffnungen miteinander kombiniert und aufeinander abgestimmt werden. Hierbei ersetzen die zweiten und dritten Abströmöffnungen im Gassack die Standardabströmöffnungen, mit denen ein Gassack üblicherweise ausgestattet ist. Die Abstimmung der Fläche der zweiten Abströmöffnungen in Bezug auf die dritten Abströmöffnungen, d.h., die Abstimmung des Verhältnisses dieser beiden Flächen zueinander, erfolgt dergestalt, dass die so genannte in-position-performance (der Gassack kann sich frei und ungehindert entfalten) der eines bekannten Standardgassackes entspricht.

Während die zweiten und dritten Abströmöffnungen permanent geöffnet sind, sind die ersten Abströmöffnungen schalt- bzw. steuerbar. D.h., das Öffnen dieser ersten Abströmöffnungen erfolgt zeitabhängig nach Zündung des Gasgenerators (beispielsweise durch eine pyrotechnische Bewegungserzeugungsvorrichtung). Bei einer frühzeitigen Öffnung dieser ersten Abströmöffnungen wird der Massestrom des Gasgenerators unterhalb einer Gassackanbindung (diese wird beispielsweise durch ein Festklemmen eines die Einströmöffnung umlaufenden Randbereiches des Gassackes, am umlaufenden Randbereich der Wandung des Generatorträgers realisiert) abgeblasen und damit der Füllgrad des Gassackes beeinflusst, wobei gleichzeitig durch zusätzliches zweite und dritte Abströmöffnungen eine effektivere Rückhalteperformance ("weicherer" Gassack) für leichtere Insassen (5%-Frau) erzielt wird. Bei einem späteren Öffnen der schalt- bzw. steuerbaren ersten Abströmöffnungen wird die Rückhalteperformance von schweren Insassen (50%- und 95%-Mann) verbessert. Das Entfalten des Gassackes kann durch eine verbesserte Erfassung der Beschleunigungswerte (Verzögerung) eines Fahrzeuginsassen bei einer das Airbagmodul auslösenden Unfallsituation unterstützt werden (frühzeitige Rückhaltung durch schnelle Gassackbereitstellung). Insgesamt kann durch den gezielt wählbaren Zeitpunkt der Öffnung der zusätzlichen Abströmfläche (erste Abströmöffnungen) eine optimale Dämpfung des Gassackes abhängig vom Insassen eingestellt werden. Die Festlegung des Öffnungszeitpunktes kann anhand einer Insassensensierung (Größe, Gewicht, Position) sowie einer Sensierung crashabhängiger Daten (Verzögerung, Geschwindigkeit) automatisch erfolgen.

Bei oop-Situationen besteht die Möglichkeit, durch sehr frühzeitiges Öffnen der schaltbaren ersten Abströmöffnungen, unter bestimmten Umständen bereits vor der Zündung des Gasgenerators, den Gasdruck im Airbagmodul (d.h. im Gassack) zusätzlich zu minimieren, um die auf den Insassen einwirkende Belastung beim Anschießen durch den Gassack weiter zu reduzieren.

Im Gegensatz zu bekannten Airbagmodulen werden die in das Airbagmodul geleiteten Gase nicht durch Öffnungen eines Generatorträgers weiter nach unten, d.h., entlang der Lenkachse in den Lenkradkorpus geleitet, sondern entlang der Lenkachse bzw. der Hauptentfaltungsrichtung des Gassackes in Richtung des öffenbaren Bereiches der Abdeckung des Airbagmoduls umgelenkt. Der Austritt des Gases erfolgt also entlang des Gassackes durch den öffenbaren Bereich der Abdeckung hindurch. Da auch bei einer oop-Situation die airbagmodulnahen Körperpartien eines zu schützenden Insassen ausreichend durch den Gassack abgedeckt sind, sind Verletzungen durch die abgeströmten heißen Gase ausgeschlossen. Zusätzlich werden durch den vorstehend beschriebenen Strömungsweg, der aus den Abströmöffnungen austretendes Gas durch den öffenbaren Bereich der Abdeckung hindurch in den Außenraum transportiert, keine angrenzenden Baugruppen beeinträchtigt. Zusätzliche Maßnahmen am Lenkrad zur Gewährleistung der Abströmung sind daher nicht notwendig. Gleichzeitig wird verhindert, dass zum Beispiel die Hände am Lenkrad geschädigt werden, wie dies beispielsweise bei einer Abströmung durch das Lenkrad möglich wäre.

Weitere Vorteile und Merkmale der Erfindung werden anhand der nachfolgenden Figurenbeschreibungen von Ausführungsbeispielen deutlich werden.

Es zeigen:
- Fig. 1: eine Draufsicht auf einen ausgebreiteten Gassack mit zweiten und dritten Abströmöffnungen sowie einer Einströmöffnung,
- Fig. 2: eine schematische, teilweise geschnittene Ansicht eines erfindungsgemäßen Airbagmoduls mit ersten, zweiten und dritten Abströmöffnungen,
- Fig. 3: eine perspektivische Ansicht eines Airbagmoduls mit geschlossenen ersten Abströmöffnungen,
- Fig. 4: eine schematische Schnittansicht des in der Figur 3 gezeigten Airbagmoduls mit geöffneten ersten Abströmöffnungen,
- Fig. 5: eine Explosionsdarstellung des in der Figur 3 bzw. Figur 4 gezeigten Airbagmoduls,
- Fig. 6: eine schematische Ansicht des in der Figur 5 gezeigten Airbagmoduls (in einem zusammengesetzten Zustand),
- Fig. 7: eine pyrotechnische Bewegungserzeugungsvorrichtung, mit einem Zünder und einem Kolben,
- Fig. 8: eine perspektivische Explosionsansicht einer Abwandlung des in den Figuren 3-6 gezeigten Airbagmoduls,
- Fig. 9: eine perspektivische Ansicht einer weiteren Abwandlung eines erfindungsgemäßen Airbagmoduls mit ersten Abströmöffnungen, die zum Ablassen von Gas geöffnet sind,
- Fig. 10: eine perspektivische Ansicht des in der Figur 9 gezeigten Airbagmoduls mit geschlossenen ersten Abströmöffnungen,
- Fig. 11: eine perspektivische Explosionsansicht des in den Figuren 9 und 10 gezeigten Airbagmoduls,
- Fig. 12: eine perspektivische Ansicht einer Kammer mit steuerbaren Ausströmöffnungen, die einen Gasgenerator einer Variante eines erfindungsgemäßen Airbagmoduls umgibt,
- Fig. 13: die in der Figur 12 gezeigte Kammer mit geöffneten Ausströmöffnungen,
- Fig. 14: eine perspektivische Explosionsansicht des in den Figuren 12 und 13 gezeigten Airbagmoduls,
- Fig. 15: eine Explosionsdarstellung einer Abwandlung des in den Figuren 5, 8 und 11 gezeigten Airbagmoduls,
- Fig. 16: eine weitere Explosionsdarstellung des in der Figur 15 gezeigten Airbagmoduls, mit einem vormontierten Untermodul, umfassend eine zylindrische Wandung, einem verschieblich an der Wandung angeordneten Ring, und einer Bewegungserzeugungsvorrichtung zum Bewegen des Ringes,
- Figur 17: eine perspektivische Ansicht des in den Figuren 15 und 16 gezeigten Airbagmoduls,
- Figur 18: eine weitere perspektivische Ansicht des in den Figuren 15 - 17 dargestellten Airbagmoduls, und
- Figur 19: eine Explosionsdarstellung einer Abwandlung des in den Figuren 15 - 18 dargestellten Airbagmoduls.

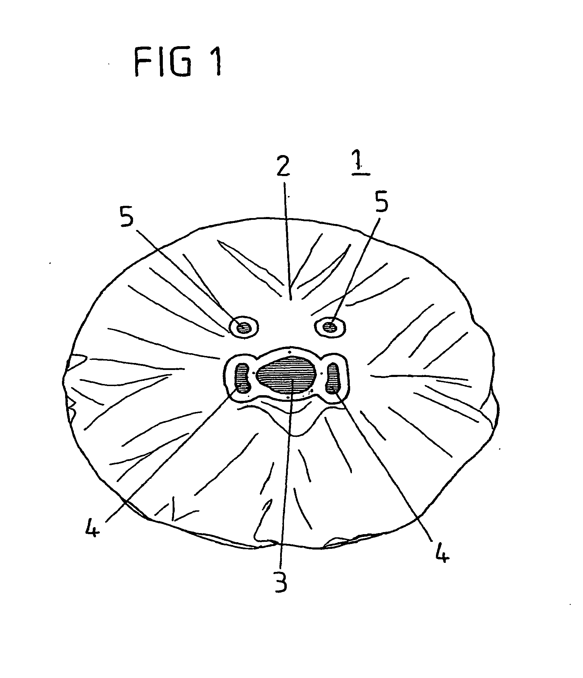

Figur 1 zeigt einen Gassack 1, der für einen Einsatz als ein Fahrergassack (Fahrerairbag) ausgebildet ist. Der Gassack 1 ist entlang einer mit der Papierebene zusammenfallenden Erstreckungsebene ausgebreitet und ist aus zwei kreisrunden Gassacklagen gefertigt, deren umlaufende Ränder zur Ausbildung des Gassackes miteinander vernäht, verklebt, verwebt oder verschweißt sind. Der Gassack 1 weist eine Seite 2 auf, die in einem aufgeblasenen Zustand des Gassackes 1 einem in der Figur 1 nicht gezeigten Airbagmodul 6 zugewandt ist, bzw. einem Fahrer, der durch den aufgeblasenen Gassack 1 geschützt werden soll, abgewandt ist. An der Seite 2 des Gassackes 1 ist mittig eine Einströmöffnung 3 in Form einer kreisrunden Öffnung vorgesehen, durch die Gas zum Aufblasen des Gassackes 1 in den Gassack 1 eingeleitet werden kann.

Der Gassack 1 verfügt über zwei zweite Abströmöffnungen 4, die an zwei einander gegenüberliegenden Randbereichen der Einströmöffnung 3 ausgebildet sind und sich entlang der Einströmöffnung 3 längs erstrecken. Diese zwei zweiten Abströmöffnungen 4 sind derart benachbart zur Einströmöffnung 3 angeordnet, dass sie im aufgeblasenen Zustand des Gassackes 1 in einem Innenraum I des Airbagmoduls 6 angeordnet sind.

Weiterhin weist der Gassack 1 dritte Abströmöffnungen 5 auf, die jeweils zum Zentrum der kreisförmigen Einströmöffnung 3 einen Abstand aufweisen, der größer ist als der Abstand der zweiten Abströmöffnungen 4 zum Zentrum der Einströmöffnung 3, wobei dieser Abstand so groß ausgebildet ist, dass die dritten Abströmöffnungen 5 in einem aufgeblasenen Zustand des Gassackes 1 außerhalb des Innenraumes I des Airbagmodules 6, und zwar in dem das Airbagmodul umgebenden Außenraum A, angeordnet sind.

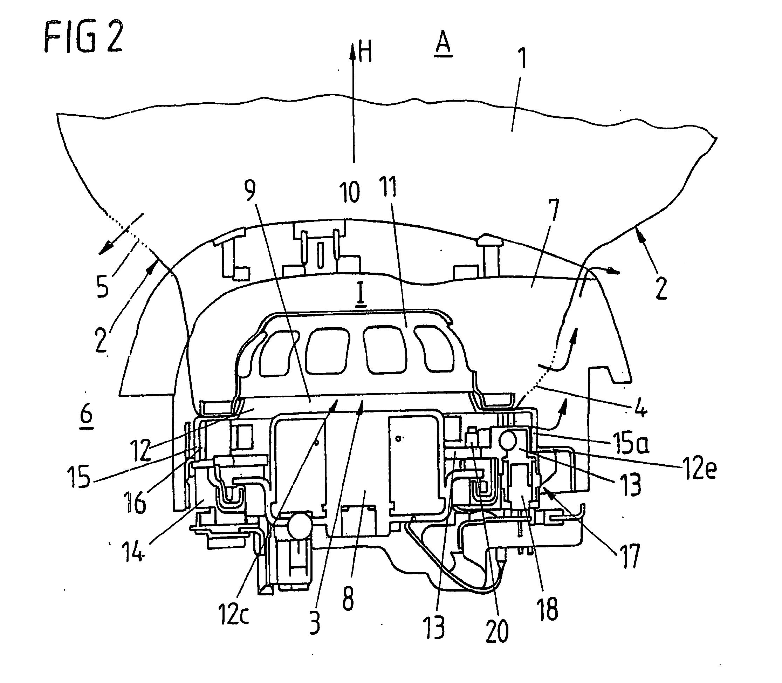

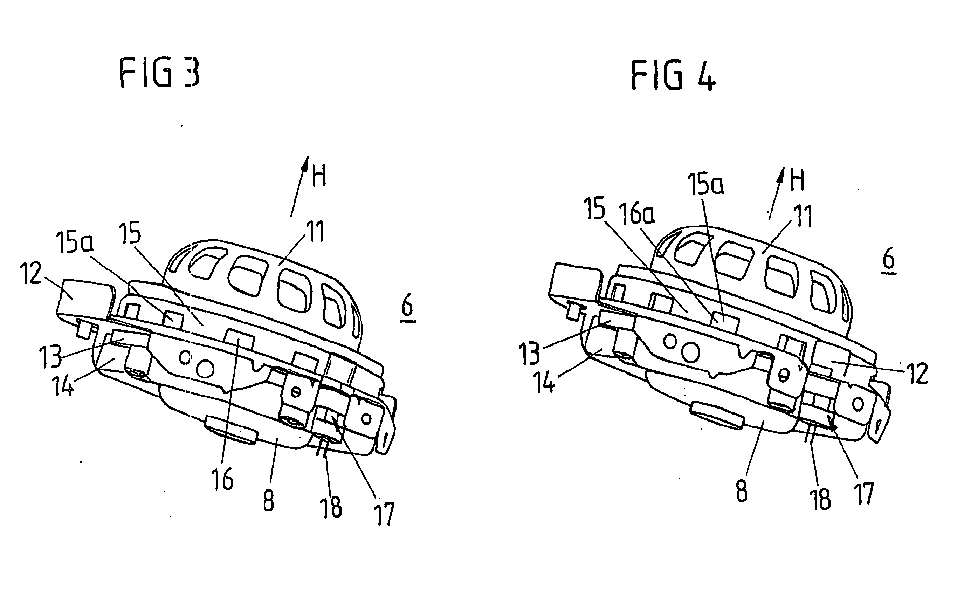

Figur 2 zeigt im Zusammenhang mit den Figuren 3 bis 7 eine teilweise geschnittene Ansicht des Airbagmoduls 6, welches eine Abdeckung 7 aufweist, die eine Aufnahme für den Gassack 1 des Airbagmoduls 6 sowie für einen Gasgenerator 8 und eine den Gasgenerator 8 umgebende Kammer 9 des Airbagmoduls 6 bildet.

Die Abdeckung 7 des Airbagmoduls 6 trennt den Innenraum I vom Außenraum A des Airbagmoduls 6. An der Abdeckung 7 des Airbagmoduls 6 ist ein öffenbarer Bereich 10 vorgesehen, der beispielsweise entlang vordefinierter Aufreißlinien aufreißt, wenn der Gassack 1 nach einem Aktivieren des Gasgenerators 8 in Folge des sich in dem Gassack 1 aufbauenden Gasdruckes entlang einer Hauptentfaltungsrichtung H des Gassackes 1 vom Innenraum 1 her gegen den öffenbaren Bereich 10 der Abdeckung 7 des Airbagmoduls 6 drückt. Unter dem Innenraum I wird dabei ein Raum des Airbagmoduls 6 verstanden, in dem der Gassack 1 in seinem nicht aufgeblasenen Zustand angeordnet ist und der in der Hauptentfaltungsrichtung H des Gassackes 1 durch die ungeöffnete Abdeckung 7 begrenzt wird.

Figur 2 zeigt das Airbagmodul 6, nachdem sich der Gassack 1 (in Figur 2 ausschnitthaft dargestellt) durch den öffenbaren Bereich 10 der Abdeckung 7 hindurch in den Außenraum A des Airbagmoduls 6 ausgebreitet hat, wobei die dritten Abströmöffnungen 5 des Gassackes 1 im Außenraum A angeordnet sind und die zweiten Abströmöffnungen 4 im Innenraum 1 des Airbagmoduls 6 angeordnet sind. Der Strömungsweg ist in der Figur 2 schematisch durch entsprechende Pfeile gekennzeichnet.

Während das in dem Gassack 1 befindliche Gas durch die dritte Abströmöffnung 5 hindurch direkt in den Außenraum A strömen kann, wird das Gas über die zweite Abströmöffnung 4 zuerst in den Innenraum 1 und von dort entlang des Gassackes 1 durch den öffenbaren Bereich 10 in den Außenraum A eingeleitet.

Die den Gasgenerator 8 umgebende Kammer 9 wird durch einen Diffusor 11, einen Generatorträger 12, eine Bodenplatte 13 und einen Träger 14 für den daran schwingungsfähig gelagerten Gasgenerator 8 gebildet. Der Diffusor 11 ist kappenförmig ausgebildet und ragt entlang der Hauptentfaltungsrichtung H durch die Einströmöffnung 3 in den (aufgeblasenen) Gassack 1 hinein, wobei ein die Einströmöffnung 3 des Gassackes 1 umlaufender Randbereich 3a der Einströmöffnung 3 entlang der Hauptentfaltungsrichtung H des Gassackes 1 zwischen einem umlaufenden Randbereich 11a des Diffusors 11 und einem umlaufenden Randbereich 12a einer zylindrischen Wandung 15 des Generatorträgers 12, die eine zentrale, der Einströmöffnung 3 zugewandte Öffnung 12c des Generatorträgers 12 umläuft, eingeklemmt ist (Gassackklemmung). Eine kleinste Fläche F, die vom umlaufenden Randbereich 3a der Einströmöffnung 3 aufgespannt bzw. begrenzt wird, ist hierbei vom Boden 12e des Generatorträgers 12 entlang der Hauptentfattungsrichtung H beabstandet.

Der Diffusor 11 und der Generatorträger 12 sind über vier Befestigungselemente 11 b, die längs erstreckt entgegen der Hauptentfaltungsrichtung H vom Randbereich 11a des Diffusors 11 abstehen, miteinander verbunden, wobei die vier Befestigungselemente 11 b entlang des ringförmigen Randbereiches 11a äquidistant zum jeweiligen nächsten Nachbarn angeordnet sind. Die vier Befestigungselemente 11 b sind durch den Befestigungselementen 11b zugeordnete Durchgangsöffnungen 12b, die am Randbereich 12a der Wandung 15 des Generatorträgers 12 ausgebildet sind, geführt, so dass freie Endabschnitte dieser Befestigungselemente 11b von einer dem Diffusor 11 abgewandten Seite des Randbereiches 12a des Generatorträgers 12 abstehen. Diese abstehenden freien Endabschnitte sind weiterhin in durchgängige Löcher 13a der Bodenplatte 13 eingeführt, die in zylinderförmigen Befestigungsbereichen 13b der Bodenplatte 13 ausgebildet sind, die (ebenso wie die Löcher 13a) mit den Befestigungselementen 11b und der Hauptentfaltungsrichtung H fluchten.

An der Bodenplatte 13 ist mittig eine kreisförmige Gasgeneratoraussparung 13c vorgesehen, die entlang der Hauptentfaltungsrichtung H der zentralen Öffnung 12c des Generatorträgers 12 und der Einströmöffnung 3 des Gassackes 1 gegenüberliegt. In diese Gasgeneratoraussparung 13c der Bodenplatte 13 ist der im Wesentlichen zylinderförmig ausgebildete Gasgenerator 8 entlang der Hauptentfaltungsrichtung H eingeführt. Der Gasgenerator 8 ist dabei über einen vom Gasgenerator 8 quer zur Hauptentfaltungsrichtung H abstehenden Flansch 8a, der den Gasgenerator 8 quer zur Hauptentfaltungsrichtung H umläuft, schwingungsfähig mit einem wannenförmig ausgebildeten Träger 14 verbunden. Eine schwingungsfähige Anbindung des Gasgenerators 8 über den Flansch 8a am Träger 14 ist nicht zwingend notwendig. Weiterhin kann der Flansch 8a selbst als Träger 14 ausgeformt werden, so dass der Träger 14 und der Gasgenerator 8 direkt miteinander verbunden sind.

Der Träger 14 ist an freien Enden der Endabschnitte der Befestigungselement 11 b, die durch die Löcher 13a der Bodenplatte 13 geführt sind, festgelegt und verschließt die Kammer 9 des Gasgenerators 8 an einer dem Diffusor 11 entlang der Hauptenttaltungsrichtung H gegenüberliegenden Seite.

An der senkrecht zur zentralen Öffnung 12c des Generatorträgers 12 orientierten zylindrischen Wandung 15, die die zentrale Öffnung 12c des Generatorträgers 12 sowie die Gasgeneratoraussparung 13c der Bodenplatte 13 quer zur Hauptentfaltungsrichtung H ringförmig umläuft, sind eine Mehrzahl erster Abströmöffnungen 15a ausgebildet, die mittels eines bewegbaren Elementes in Form eines zylindrischen Ringes 16 verschließbar bzw. öffenbar sind.

Hierzu liegt der zylindrische Ring 16 an einer dem Gasgenerator 8 zugewandten Innenseite der zylindrischen Wandung 15 an und ist entlang einer quer zur Hauptentfaltungsrichtung H verlaufenden Bewegungsrichtung B, die die zylindrische Wandung 15 quer zur Hauptentfaltungsrichtung H umläuft, zwischen zwei Positionen hin und her verschiebbar an der Innenseite der Wandung 15 gelagert. D.h., der zylindrische Ring 16 kann um seine mit der Hauptentfaltungsrichtung H zusammenfallende Zylinderachse zwischen den beiden Positionen hin und her gedreht werden.

An dem Ring 16 sind Aussparungen 16a von der Gestalt der ersten Abströmöffnungen 15a der Wandung 15 vorgesehen, die derart entlang des zylindrischen Ringes 16 angeordnet sind, dass sie vollständig in Deckung mit den ersten Abströmöffnungen 15a der Wandung 15 bringbar sind. Im Falle zur Deckung gebrachter erster Abströmöffnungen 15a und Aussparungen 16a sind die ersten Abströmöffnungen 15a vollständig geöffnet, so dass durch den Gasgenerator 8 bereitgestellte Gase durch die ersten Abströmöffnungen 15a hindurch in den Innenraum I und von dort in den Außenraum A des Airbagmoduls 6 gelangen können. Durch Drehen bzw. Verschieben des Ringes 16 können die Aussparungen 16a des Ringes 16 außer Deckung mit den ersten Abströmöffnungen 15a der Wandung 15 des Generatorträgers 12 gebracht werden, so dass die ersten Abströmöffnungen 15a verschlossen sind.

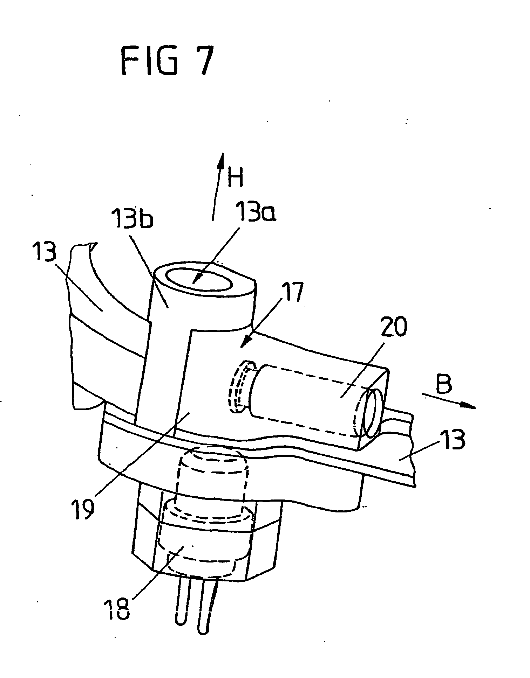

Damit der zylindrische Ring 16 zum Öffnen der anfangs geschlossenen Abströmöffnungen 15a entlang der Bewegungsrichtung B verschoben werden kann, ist an der Bodenplatte 13 eine Bewegungserzeugungsvorrichtung 17 gemäß Figur 7 in Form eines pyrotechnischen Aktuators vorgesehen.

Die Bewegungserzeugungsvorrichtung 17 weist gemäß Figur 7 einen Zünder 18 auf, der mittels einer Steuerelektronik ansteuerbar, d.h., zündbar ist und in einer Druckkammer 19, die an der Bodenplatte 13 ausgebildet ist, einen Überdruck erzeugen kann, der einen beweglich in der Druckkammer 19 gelagerten, längs erstreckten Kolben 20 entlang der Bewegungsrichtung B aus der Druckkammer 19 herausdrückt.

Zur Übertragung der Kolbenbewegung ist der Kolben 20 entlang der Bewegungsrichtung B in einer Ausnehmung 21 des Ringes 16 angeordnet, die den Ring 16 entlang der Bewegungsrichtung B unterbricht, wobei der Kolben 20 derart angeordnet ist, dass er durch einen in der Druckkammer 19 bereitgestellten Überdruck entlang der Bewegungsrichtung B gegen einen quer zur Bewegungsrichtung B verlaufenden Rand 22 der Ausnehmung 21 des Ringes 16 drückt, so dass der Ring 16 zum Öffnen der ersten Abströmöffnungen 15a entlang der Bewegungsrichtung B gegenüber der Wandung 15 gedreht wird. Bei der Ausnehmung 21 kann es sich auch um eine der Aussparungen 16a des Ringes 16 handeln.

Vorteilhaft bezüglich der Anordnung des Kolbens 20 in der Ausnehmung 21 des Ringes 16 ist, dass der Kolben 20 entlang der Bewegungsrichtung B zwischen dem dem Kolben 20 zugewandten Rand 22 der Ausnehmung 21 und einem dem Rand 22 entlang der Bewegungsrichtung B gegenüberliegenden weiteren Rand der Ausnehmung 21 angeordnet ist, und zwar derart, dass er tangential zum Ring 16 gegen den ihm zugewandten Rand 22 des Ringes 16 drücken kann. Hierdurch werden Verformungen reduziert, die auftreten können, wenn ein derartiger Kolben 20 radial beabstandet zum Ring 16 gegen einen vom Ring abstehenden Bereich zum Verdrehen des Ringes gegenüber der Wandung 15 drückt. Die vorstehend beschriebene Anordnung des Kolbens 20 erlaubt daher eine material- und gewichtsoptimierte Herstellung des Ringes 16.

Damit der Ring 16 sicher entlang der Wandung 15 des Generatorträgers 12 durch den Kolben 20 verschoben werden kann, können am Generatorträger 12 und/oder an der Bodenplatte 13 Führungsmittel vorgesehen sein, die den zylindrischen Ring 16 entlang der Bewegungsrichtung B führen. Die Bodenplatte 13 weist z.B. ein derartiges Führungsmittel in Form einer die Gasgeneratoraussparung 13c umlaufenden Stufe auf, entlang der ein der Bodenplatte 13 zugewandter Rand des Ringes 16 gleiten kann.

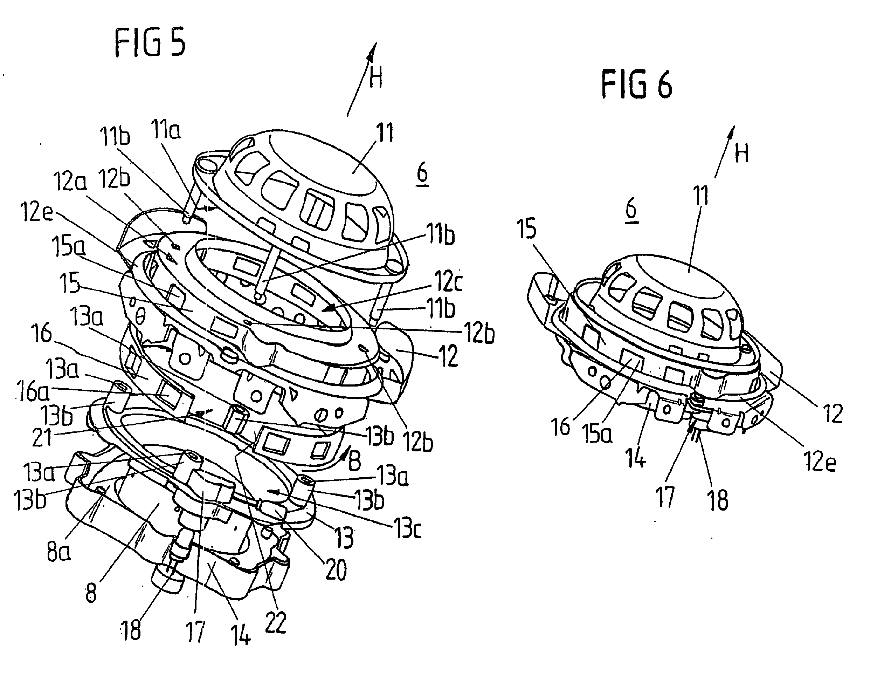

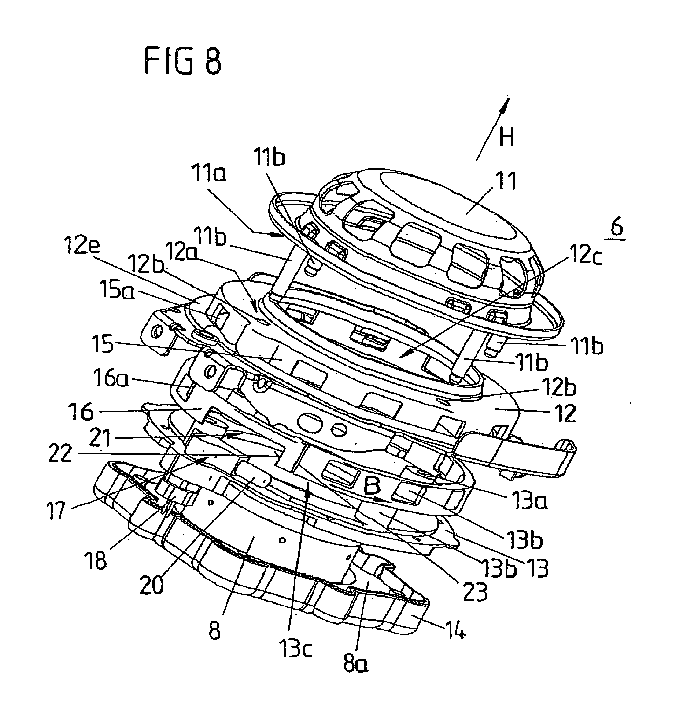

Figur 8 zeigt eine Abwandlung des in der Figur 5 gezeigten Airbagmoduls 6, bei dem im Unterschied zur Figur 5 der Ring 16 entlang der Bewegungsrichtung B nicht durch die Ausnehmung 21 unterbrochen ist. Diese ist im gezeigten Ausführungsbeispiel des Ringes 16 an dem der Bodenplatte 13 zugewandten Rand des Ringes 16 ausgebildet und weist einen quer zur Bewegungsrichtung B verlaufenden Rand 22 auf, gegen den der Kolben 20 zum Verschieben des Ringes 16 drücken kann. Allerdings wird bei der in der Figur 8 dargestellten Abwandlung des Airbagmoduls 6 der Ring 16 nicht wie in der Figur 5 durch den Kolben 20 entlang der Bewegungsrichtung B geschoben, sondern durch den gegen den Rand 22 drückenden Kolben 20 gezogen, da in der Bewegungsrichtung B vor dem Rand 22 der Ausnehmung 21 des Ringes 16 eine parallel zum Rand 22 verlaufende weitere Ausnehmung 23 in Form eines Spaltes ausgebildet ist, die den Ring 16 unterbricht. Hierdurch wird eine durch den Kolben 20 bewirkte Deformation des Ringes 16 reduziert.

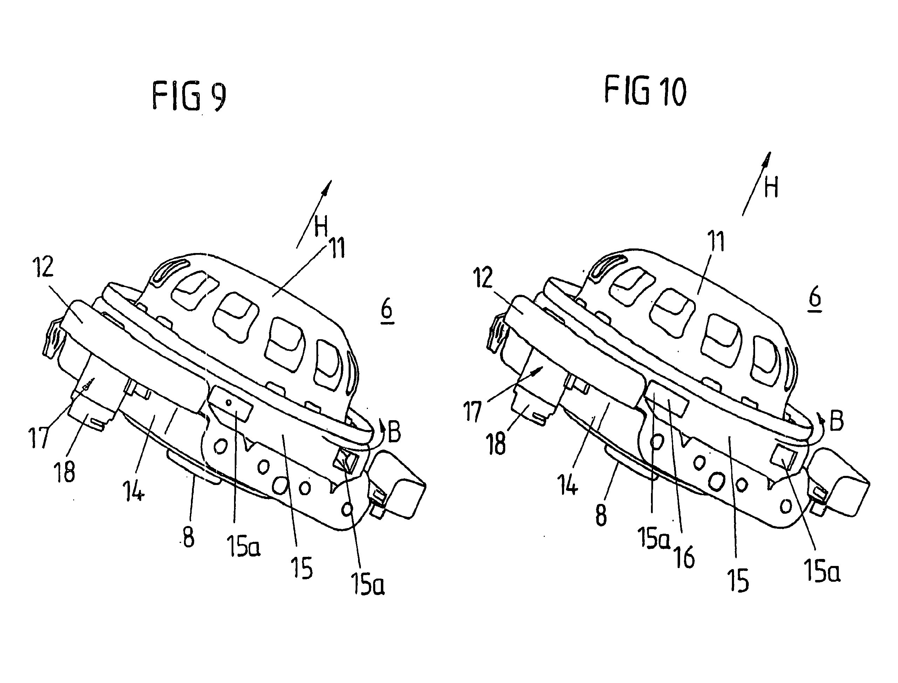

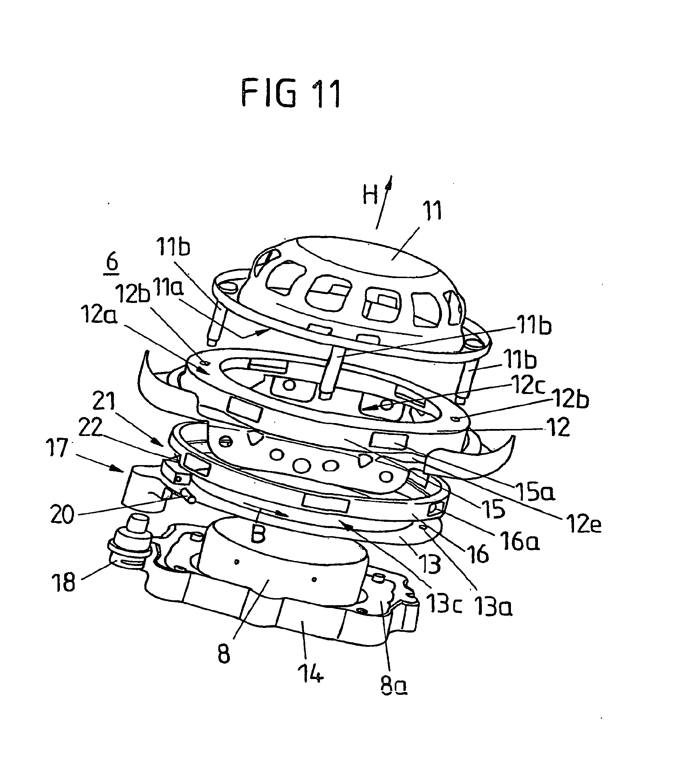

Figur 9 zeigt im Zusammenhang mit den Figuren 10 und 11 eine weitere Abwandlung des in der Figur 5 bzw. Figur 8 gezeigten Airbagmoduls 6, bei dem im Unterschied zur Figur 5 bzw. Figur 8 eine Ausnehmung 21 am Ring 16 vorgesehen ist, die den Ring 16 nicht unterbricht, d.h., der Ring 16 ist in sich geschlossen ausgebildet, so dass der Kolben 20, der zum Bewegen des Ringes 16 entlang der Bewegungsrichtung B gegen den Rand 22 dieser Ausnehmung 21 drückt, den Ring 16 entlang der Bewegungsrichtung B schiebt. Damit der Ring 16 dabei weniger stark durch den Kolben 20 beim Verschieben gegenüber der Wandung 15 deformiert wird, weist er senkrecht zur Bewegungsrichtung B einen im Wesentlichen U-förmigen Querschnitt auf oder eine vergieichbare Profilierung.

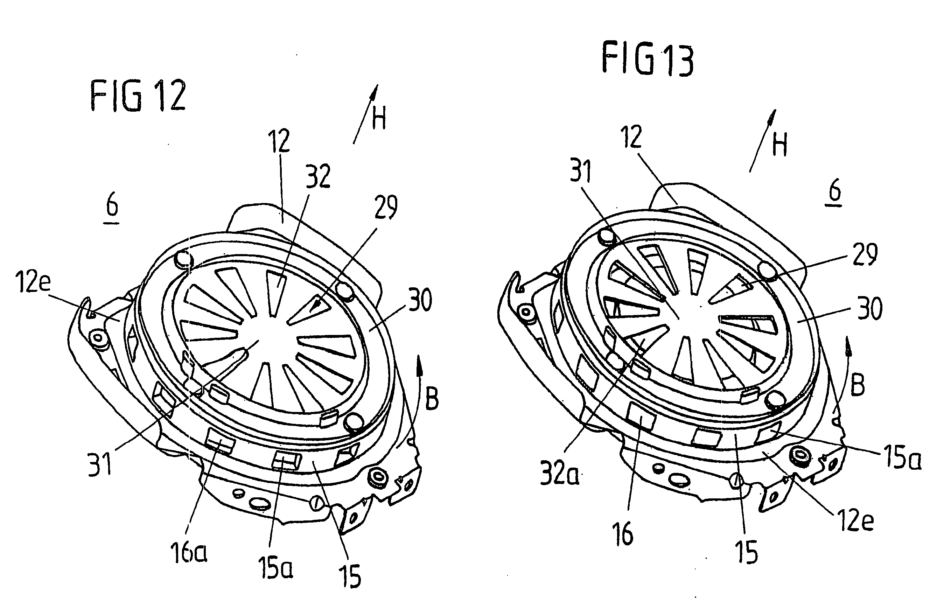

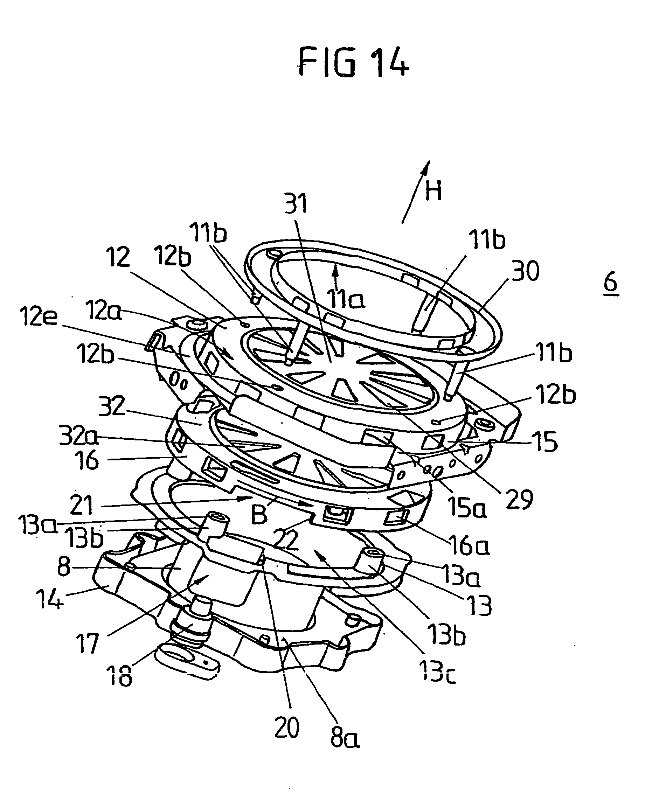

Figur 12 zeigt im Zusammenhang mit den Figuren 13 und 14 eine perspektivische, ausschnitthafte Ansicht bzw. Explosionsansicht eines Airbagmoduls 6, dessen Generatorträger 12 im Unterschied zu den vorstehend dargestellten Ausführungsformen des Generatorträgers 12 keine permanent geöffnete zentrale Öffnung 12c aufweist, sondern eine Mehrzahl strahlenförmig angeordneter Ausströmöffnungen 29, durch die Gas aus der Kammer 9 des Airbagmoduls 26 über die Einströmöffnung 3 in den Gassack 1 gelangen kann. Hierzu sind diese Ausströmöffnungen 29 entlang der Hauptentfaltungsrichtung H des Gassackes 1 der Einströmöffnung 3 zugewandt und liegen dieser entlang der Hauptentfaltungsrichtung H gegenüber.

Die Ausströmöffnungen 29 können derart ausgebildet sein, dass das Gas, das zum Aufblasen des Gassackes 1 durch diese Ausströmöffnungen 29 hindurch tritt, durch die spezielle Ausgestaltung der Ausströmöffnungen 29 verwirbelt wird, so dass der Diffusor 11 verzichtbar ist. Das in den Figuren 12 bis 14 dargestellte Airbagmodul 6 weist dementsprechend lediglich einen Klemmring 30 auf, an dem der dem Generatorträger 12 zugewandte Randbereich 11a ausgebildet ist (siehe Figur 5), der einen die Einströmöffnung 3 umlaufenden Randbereich 3a des Gassackes 1 gegen den Generatorträger 12 drückt und den Gassack 1 somit am Generatorträger 12 festlegt.

Von dem Klemmring 30 stehen entgegen der Hauptentfaltungsrichtung H die Befestigungselemente 11 b ab, entsprechend den vorstehend beschriebenen Ausführungsformen des Airbagmoduls 6.

Zum Verschließen der Ausströmöffnungen 29 des Generatorträgers 12 ist am Ring 16 im Gegensatz zu den Figuren 2 bis 11 eine Ventilplatte 32 ausgebildet, die eine Mehrzahl von Öffnungen 32a aufweist, die mit den Ausströmöffnungen 29 des Ausströmbereiches 31 des Generatorträgers 12 in Deckung bringbar sind. Hierzu kann die Ventilplatte 32 mit samt dem daran befestigten Ring 16 (Ring 16 und Ventilplatte 32 können einstückig ausgebildet sein) entlang einer quer zur Hauptentfaltungsrichtung H verlaufenden Bewegungsrichtung B gedreht werden, d.h., die Ventilplatte 32 kann um eine senkrecht auf der Ventilplatte 32 stehende Achse, die mit der Hauptentfaltungsrichtung H zusammenfällt, rotiert werden, wobei die Öffnungen 32a der Ventilplatte 32 zum Öffnen der Ausströmöffnungen 29 des Ausströmbereiches 31 mit den Ausströmöffnungen 29 zur Deckung gebracht werden können. Zum Verschließen der Ausströmöffnungen 29 mittels der Ventilplatte 32 wird diese derart gedreht, dass die Öffnungen 32a der Ventilplatte 32 vollständig außer Deckung mit den Ausströmöffnungen 29 geraten. Da die Ventilplatte 32 mit dem Ring 16 gekoppelt ist, kann die Ventilplatte 32 über die in den Figuren 2 bis 11 dargestellte Bewegungserzeugungsvorrichtung 17 entlang der Bewegungsrichtung B bewegt werden. Die Ausströmöffnungen 29 sind derart an dem Ausströmbereich 31 des Generatorträgers 12 ausgebildet, dass bei durch die Ventilplatte 32 verschlossenen Ausströmöffnungen 29 die ersten Abströmöffnungen 15a der zylindrischen Wandung 15 des Generatorträgers 12 geöffnet sind und dass die ersten Abströmöffnungen 15a durch den Ring 16 verschlossen sind, wenn die Ausströmöffnungen 29 geöffnet sind, d.h., sich mit den an der Ventilplatte 32 ausgebildeten Öffnungen 32a in Deckung befinden.

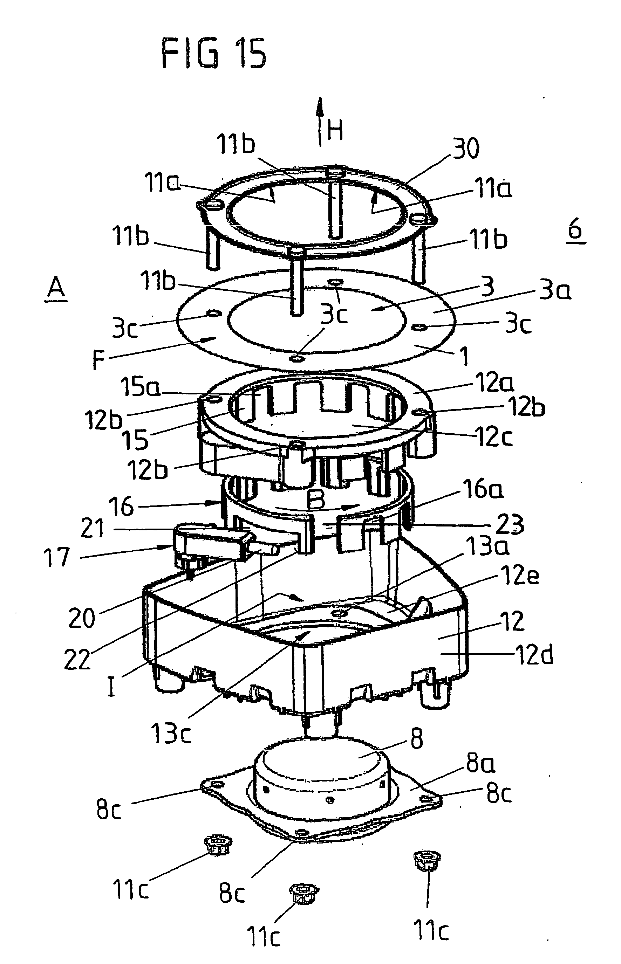

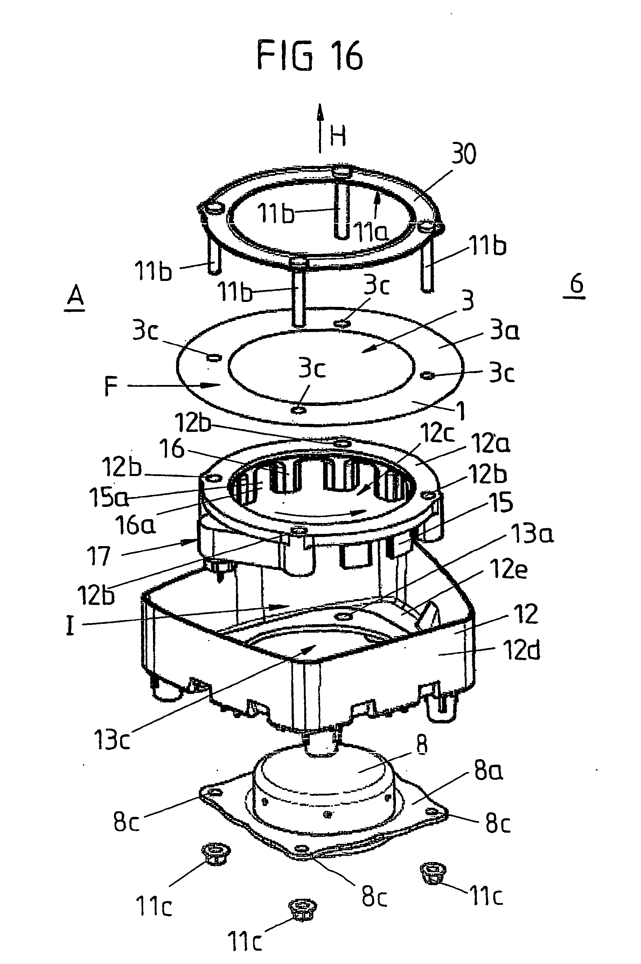

Die Figur 15 zeigt im Zusammenhang mit den Figuren 16 bis 18 eine Abwandlung des in den Figuren 5, 8 und 11 gezeigten Airbagmoduls 6, wobei im Unterschied zu diesen Ausführungsbeispielen die zylindrische Wandung 15, die die Gasgeneratoraussparung 13c des Bodens 12e des Generatorträgers 12 umläuft, nicht integral mit dem Generatorträger 12 verbunden ist, sondern ein separat mit dem Generatorträger 12 verbindbares Element darstellt.

Das in der Figur 15 in einer Explosionsdarstellung gezeigte Airbagmodul 6 ist ebenfalls zur Montage in ein um eine Lenkachse drehbares Lenkrad eines Kraftfahrzeuges ausgelegt und weist einen Generatorträger 12 auf, der zur Aufnahme eines Gasgenerators 8, eines Untermoduls zum steuerbaren Abströmen von Gas, sowie des Gassackes 1 in einem gefalteten Zustand dient. Das Untermodul umfasst dabei eine zylindrische Wandung 15 und einen daran gelagerten zylindrischen Ring 16 einer der in den Figuren 5, 8 und 11 gezeigten Arten sowie eine Bewegungserzeugungsvorrichtung 17 der in der Figur 7 gezeigten Art, mittels der der Ring 16 bezüglich der zylindrischen Wandung 15 verschiebbar ist, so dass an der zylindrischen Wandung 15 ausgebildete (durch den Ring 16 verschlossene) erste Abströmöffnungen 15a durch Verschieben des Ringes 16 zum Abströmen von Gas aus dem Gassack 1 öffenbar sind.

Der Generatorträger 12 besitzt einen senkrecht zur Hauptentfaltungsrichtung H erstreckten Boden 12e, mit einem äußeren umlaufenden Rand, von dem eine Außenwand 12d des Generatorträgers 12 entlang der Hauptentfaltungsrichtung H absteht und den Boden 12e mit einer im Wesentlichen parallel zum Boden 12e verlaufenden nicht gezeigten Abdeckung 7 der in der Figur 2 gezeigten Art verbindet. Die Hauptentfaltungsrichtung H des Gassackes 1 verläuft dabei parallel zur Lenkachse des Lenkrades, in das das Airbagmodul 6 einzubauen ist.

Der Boden 12e des Generatorträgers 12 weist eine mittige Gasgeneratoraussparung 13c auf, mit einem die Gasgeneratoraussparung 13c umlaufenden Randbereich des Bodens 12e, von dem die lösbar am Boden 12e festlegbare zylindrische Wandung 15 entlang der Hauptentfaltungsrichtung H absteht, wobei sie die Gasgeneratoraussparung 13c quer zur Hauptentfaltungsrichtung H umläuft. An der zylindrischen Wandung 15 sind erste Abströmöffnungen 15a ausgebildet, die an einer dem Boden 12e zugewandten Stirnseite der zylindrischen Wandung 15 bis zum Boden 12e heranreichen und quer zur Hauptentfaltungsrichtung H jeweils einer dem Außenraum A abgewandten Innenseite der Außenwand 12d des Generatorträgers 12 zugewandt sind.

An einer der Außenwand 12d des Generatorträgers 12 abgewandten Innenseite der zylindrischen Wandung 15 ist ein zylindrischer Ring 16 der in der Figur 8 gezeigten Art entlang einer die Gasgeneratoraussparung 13c quer zur Hauptentfaltungsrichtung H umlaufenden Bewegungsrichtung B verschieblich an der zylindrischen Wandung 15 gelagert. Der Ring 16 weist gemäß der Figur 8 Aussparungen 16a auf, die sich in einer Anfangsposition des Ringes 16 außer Deckung mit den ersten Abströmöffnungen 15a der zylindrischen Wand 15 befinden. In dieser Anfangsposition des Ringes 16 sind die ersten Abströmöffnungen 15a folglich geschlossen, so dass aus dem Gasgenerator 8 austretendes Gas entlang der Hauptentfaltungsrichtung H an den ersten Abströmöffnungen 15a vorbei durch die Einströmöffnung 3 hindurch in den Gassack 1 gelangt. Zum Öffnen der ersten Abströmöffnungen 15a kann der Ring 16 mittels der Bewegungserzeugungsvorrichtung 17 entlang der Bewegungsrichtung B in eine Position verschoben werden, in der die Aussparungen 16a des Ringes 16 deckungsgleich mit den ersten Abströmöffnungen 15a der zylindrischen Wandung 15 angeordnet sind, so dass die ersten Abströmöffnungen 15a geöffnet sind. Hierzu drückt der Kolben 20 der Bewegungserzeugungsvorrichtung 17 gemäß der Figur 5 bzw. 8 entlang der Bewegungsrichtung B gegen den Rand 22 der Ausnehmung 21 des Ringes 16. Im Unterschied zur Figur 8 sind die Aussparungen 16a des Ringes 16 entsprechend den ersten Abströmöffnungen 15a der zylindrischen Wandung 15 entlang der Hauptentfaltungsrichtung H bis zum Boden 12e reichend ausgebildet.

Die zylindrische Wandung 15 weist einen die Hauptentfaltungsrichtung H umlaufenden Randbereich 12a auf, der die der Einströmöffnung 3 des Gassackes 1 entlang der Hauptentfaltungsrichtung H gegenüberliegende zentrale Öffnung 12c berandet (vgl. Figuren 2, 5, 8 und 11) und der sich zur flächigen Anlage an dem die Einströmöffnung 3 berandenden Randbereich 3a entlang einer im Wesentlichen parallel zum Boden 12e verlaufenden Erstreckungsebene (Fläche F) erstreckt. Der Randbereich 3a der Einströmöffnung 3 des Gassackes 1 ist entlang der Hauptentfaltungsrichtung H zwischen einem Klemmring 30 der in der Figur 14 gezeigten Art und dem Randbereich 12a der zylindrischen Wandung 15 angeordnet.

Vom Klemmring 30, der die Hauptentfaltungsrichtung H ringförmig umläuft, stehen entgegen der Hauptentfaltungsrichtung H vier Befestigungselemente 11b ab, die entlang des Klemmringes 30 äquidistant zueinander angeordnet sind. Die vier Befestigungselemente 11 b durchgreifen Aussparungen 3c, die am Randbereich 3a des Gassackes 1 ausgebildet sind. Mit diesen Aussparungen 3c des Randbereiches 3a des Gassackes 1 fluchten entlang der Hauptentfaltungsrichtung H erstreckte Durchgangsöffnungen 12b der zylindrischen Wandung 15, in die die Befestigungselemente 11b zum Festlegen des Klemmringes 30 an der zylindrischen Wandung 15 eingeführt sind. Die Durchgangsöffnungen 12b münden an einer dem Boden 12e zugewandten Stirnseite der zylindrischen Wandung 15 und fluchten mit Löchern 13a, die am Randbereich der Generatoraussparung 13c des Bodens 12e ausgebildet sind. Die Länge der Befestigungselemente 11b entlang der Hauptentfaltungsrichtung H ist dergestalt ausgelegt, dass die durch die Durchgangsöffnungen 12b geführten Befestigungselemente 11 b ebenso die Löcher 13a des Randbereiches des Bodens 12e des Generatorträgers 12 durchgreifen, so dass freie Endabschnitte der Befestigungselemente 11 b entgegengesetzt zur Hauptentfaltungsrichtung H von einer dem Gassack 1 abgewandten Außenseite des Bodens 12e abstehen.

In die Gasgeneratoraussparung 13c ist entlang der Hauptentfaltungsrichtung H ein Gasgenerator 8 eingeführt, der über einen den Gasgenerator 8 im Querschnitt umlaufenden Flansch 8a verfügt, der zur Anlage an einem umlaufenden, die Gasgeneratoraussparung 13c berandenden Randbereich der dem Gassack 1 abgewandten Außenseite des Bodens 12e ausgebildet ist. Dabei weist der Flansch 8a des Gasgenerators 8 Aussparungen 8c zum Befestigen des Gasgenerators 8 am Generatorträger 12 auf, die mit den Löchern 13a des Bodens 12e des Generatorträgers 12 fluchten und ebenfalls von den freien Endabschnitten der Befestigungselemente 11b entlang der Hauptentfaltungsrichtung H des Gassackes 1 durchgriffen werden. An diesen freien Endabschnitten der Befestigungselemente 11 b, die entgegengesetzt zur Hauptentfaltungsrichtung H vom Flansch 8a des Gasgenerators 8 abstehen, sind Gewinde vorgesehen, auf die Muttern 11c aufgeschraubt sind. Somit wird mittels der vom Klemmring 30 abragenden Befestigungselemente 11b sowohl der Randbereich 3a des Gassackes 1 zwischen dem Klemmring 30 und dem Randbereich 12a der Wandung 15 festgeklemmt als auch die Wandung 15 (im Falle einer separat ausgebildeten Wandung 15) sowie der Gasgenerator 8 am Boden 12e des Generatorträgers 12 befestigt.

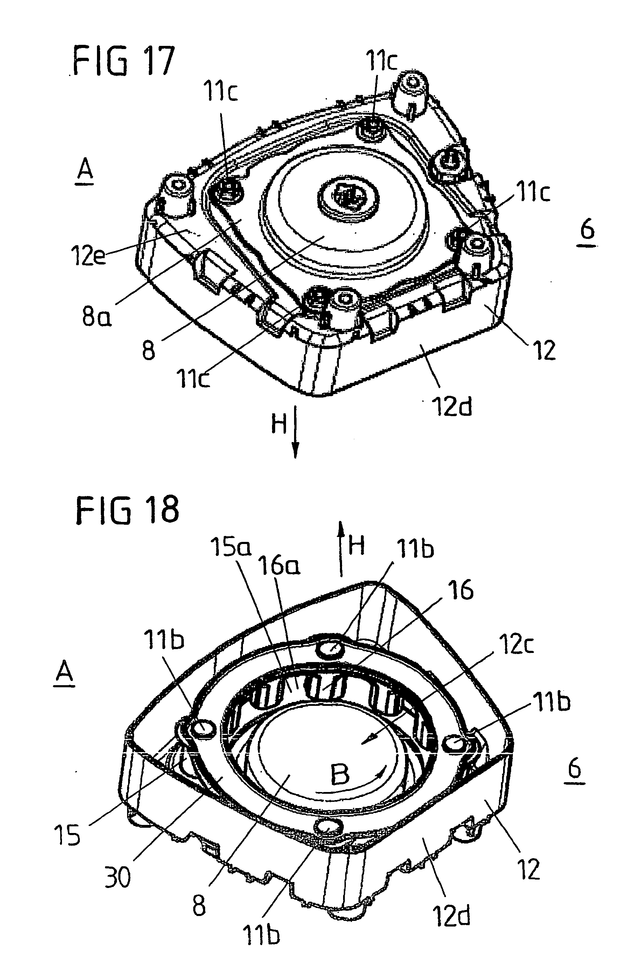

Die Figuren 17 und 18 zeigen das vollständig montierte Airbagmodul 6 von der dem Gassack 1 abgewandten Außenseite des Bodens 12e des Airbagmoduls 6 bzw. von einer einem Fahrer zugewandten Oberseite einer (nicht gezeigten) Abdeckung 7 des Airbagmoduls 6 her. Figur 16 zeigt ebenfalls eine Explosionsdarstellung des in der Figur 15 gezeigten Airbagmoduls 6, wobei im Unterschied zur Figur 15 das aus der zylindrischen Wandung 15, dem Ring 16 und der Bewegungserzeugungsvorrichtung 17 bestehende Untermodul vollständig montiert ist.

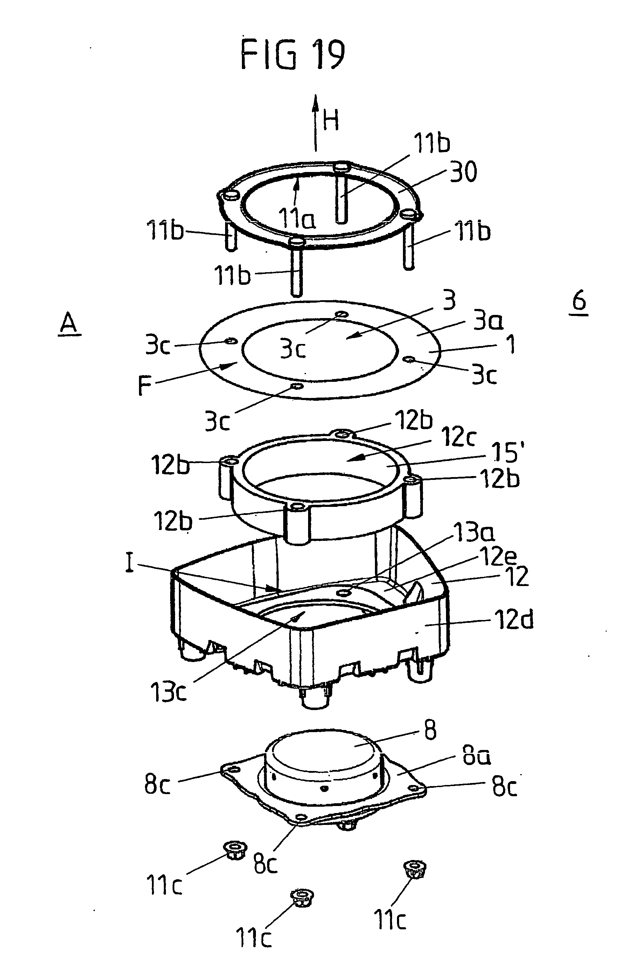

Figur 19 zeigt eine nicht zur Erfindung schörendp Abwandlung des in den Figuren 15 bis 18 gezeigten Airbagmoduls 6, bei der das Untermodul 15, 16, 17 der Figur 15 bzw. 16 durch eine weitere zylindrische Wandung 15' ersetzt ist, die quer zur Hauptentfaltungsrichtung H die Gasgeneratoraussparung 13c durchgängig umläuft, d.h. keine Abströmöffnungen zum Ablassen von Gas aufweist. Ein derartiges Austauschen des Untermoduls 15, 16, 17 gegen die weitere zylindrische Wandung 15' ist auf einfache Art und Weise möglich, da beide Komponenten, wie vorstehend beschrieben, lösbar am Generatorträger 12 festlegbar sind. Die weitere zylindrische Wandung 15' ohne Abströmöffnungen 15a entspricht in ihren wesentlichen Abmessungen der Wandung 15 (mit Abströmöffnungen 15a), d.h., die Höhen der zylindrischen Wandungen 15, 15' entlang der Hauptentfaltungsrichtung H sind betragsmäßig gleich, genauso wie die räumlichen Positionen der Durchgangsöffnungen 12b der zylindrischen Wandungen 15, 15' zueinander. Weiterhin stimmen bevorzugt ebenfalls die Innen- bzw. Außenradien der beiden umlaufenden Wandungen 15, 15' in Bezug auf die Hauptentfaltungsrichtung H im Wesentlichen überein. Zum Austauschen der zylindrischen Wandung 15 bzw. des Untermoduls 15, 16, 17 gegen die weitere Wandung 15' (und umgekehrt) müssen somit mit Vorteil keine weiteren (baulichen) Veränderungen am Generatorträger 12 vorgenommen werden. Hierdurch kann auf vorteilhafte, kostengünstige Weise ein Airbagmodul 6 ohne erste Abströmöffnungen 15a gemäß der Figur 19 zu einem Airbagmodul 6 mit ersten Abströmöffnungen 15a gemäß der Figur 15 nachgerüstet werden.

## Patentansprüche

1. Airbagmodul für ein Kraftfahrzeug, mit
- einem Gassack (1), der zum Schutz eines Insassen mit Gas aufblasbar ist und sich beim Aufblasen entlang einer Hauptentfaltungsrichtung (H) auf den zu schützenden Insassen zu bewegt,
- einer Einströmöffnung (3) des Gassackes (1), durch die hindurch der Gassack (1) mit Gas aufblasbar ist,
- einem eine fiktive Fläche aufspannenden umlaufenden Randbereich (3a) der Einströmöffnung (3), wobei die fiktive Fläche eine Ebene bildet,
- einem Gasgenerator (8), mit dem das Gas zum Aufblasen des Gassackes (1) erzeugbar ist, wobei dieses aus mindestens einer Gasaustrittsöffnung des Gasgenerators (8) austritt und durch die Einströmöffnung (3) in den Gassack (1) gelangt,
- einem Generatorträger (12) zum Tragen des Gasgenerators (8), der einen entlang der durch den Randbereich (3a) der Einströmöffnung (3) aufgespannten Fläche erstreckten Boden (12e) aufweist, an dem der Gasgenerator (8) befestigt ist, wobei der Boden (12e) einen Innenraum (I) des Airbagmoduls (6) entgegen der Hauptentfaltungsrichtung (H) von einem das Airbagmodul (6) umgebenden Außenraum (A) trennt, der Gassack (1) in seinem nicht aufgeblasenen Zustand in dem Innenraum (I) angeordnet ist und der Innenraum (I) in der Hauptentfaltungsrichtung (H) des Gassackes (1) durch eine Abdeckung (7) des Airbagmodules (6) begrenzt wird, die hierdurch den Außenraum (A) vom Innenraum (I) des Airbagmodules (6) trennt, wobei
- die durch den Randbereich (3a) der Einströmöffnung (3) aufgespannte Fläche (F) entlang der Hauptentfaltungsrichtung (H) vom Boden (12e) des Generatorträgers (12) beabstandet ist, und wobei
- vom Boden (12e) eine umlaufende Wandung (15, 15') entlang der Hauptentfaltungsrichtung (H) absteht, an deren Randbereich (12a) der Randbereich (3a) der Einströmöffnung (3) festgelegt ist,
**dadurch gekennzeichnet,**
- **dass** die Wandung (15) zumindest eine erste Abströmöffnung (15a) aufweist, durch die hindurch aus der Gasaustrittsöffnung des Gasgenerators (8) austretendes Gas in den Außenraum (A) des Airbagmoduls (6) gelangen kann, wobei die erste Abströmöffnung (15a) derart im Innenraum (I) des Airbagmodules (6) angeordnet ist, dass aus der ersten Abströmöffnung (15a) austretendes Gas durch einen öffenbaren Bereich (10) der Abdeckung (7) hindurch in den Außenraum (A) gelangen kann, durch den hindurch der Gassack (1) in den Außenraum (A) entfaltbar ist,
- **dass** ein bewegbares Element (16) in Form eines zylindrischen Ringes mit einer Aussparung (16a) entlang einer die Wandung (15) umlaufenden Bewegungsrichtung (B) verschiebbar an der Wandung (15) angeordnet ist, und
- **dass** die Aussparung (16a) zum Öffnen der ersten Abströmöffnung (15a) durch ein Verschieben des bewegbaren Elementes (16) entlang der Bewegungsrichtung (B) mit der ersten Abströmöffnung (15a) in Deckung bringbar ist.

2. Airbagmodul nach Anspruch 1, **dadurch gekennzeichnet, dass** die Wandung (15, 15') einen dem Randbereich (3a) der Einströmöffnung (3) entlang der Hauptentfaltungsrichtung (H) zugewandten Randbereich (12a) aufweist.

3. Airbagmodul nach Anspruch 2, **dadurch gekennzeichnet, dass** der Randbereich (12a) der Wandung (15, 15') zur flächigen Anlage an den Randbereich (3a) der Einströmöffnung (3) ausgebildet ist.

4. Airbagmodul nach einem der vorangegangenen Ansprüche, **dadurch gekennzeichnet, dass** die Fläche (F) eine Ebene bildet.

5. Airbagmodul nach einem der vorangegangenen Ansprüche, **dadurch gekennzeichnet, dass** der Gassack (1) über den Randbereich (3a) der Einströmöffnung (3) an einer Komponente des Airbagmoduls (6) festgelegt ist.

6. Airbagmodul nach einem der vorangegangenen Ansprüche, **dadurch gekennzeichnet, dass** der Boden (12e) eine Gasgeneratoraussparung (13c) zur Aufnahme des Gasgenerators (8) aufweist.

7. Airbagmodul nach Anspruch 1 und Anspruch 6, **dadurch gekennzeichnet, dass** die Wandung (15, 15') die Gasgeneratoraussparung (13c) quer zur Hauptentfaltungsrichtung (H) umläuft.

8. Airbagmodul nach einem der vorangegangenen Ansprüche, **dadurch gekennzeichnet, dass** die Wandung (15, 15') hohlzylinderförmig ausgebildet ist.

9. Airbagmodul nach Anspruch 2 oder einem der Ansprüche 3 bis 8 soweit rückbezogen auf Anspruch 2, **dadurch gekennzeichnet, dass** der Randbereich (12a) der Wandung (15, 15') flächig ringförmig ausgebildet ist

10. Airbagmodul nach Anspruch 2 oder einem der Ansprüche 3 bis 9 soweit rückbezogen auf Anspruch 2, **dadurch gekennzeichnet, dass** der Randbereich (3a) der Einströmöffnung (3) am Randbereich (12a) der Wandung (15, 15') festgelegt ist.

11. Airbagmodul nach einem der vorangegangenen Ansprüche , **dadurch gekennzeichnet, dass** die Aussparung (16a) zum Verschließen der ersten Abströmöffnung (15a) durch ein Verschieben des bewegbaren Elementes (16) entlang der Bewegungsrichtung (B) mit der ersten Abströmöffnung (15a) außer Deckung bringbar ist.

12. Airbagmodul nach einem der vorangegangenen Ansprüche, **dadurch gekennzeichnet, dass** das bewegbare Element als ein entlang der Bewegungsrichtung (B) umlaufender zylindrischer Ring (16) ausgebildet ist.

13. Airbagmodul nach Anspruch 12, **dadurch gekennzeichnet, dass** der Ring (16) zum Verschieben des Ringes (16) entlang der Bewegungsrichtung (B) eine Ausnehmung (21) mit einem quer zur Bewegungsrichtung (B) orientierten Rand (22) aufweist.

14. Airbagmodul nach Anspruch 13, **dadurch gekennzeichnet, dass** die Ausnehmung (21) als ein den Ring (16) unterbrechender Spalt ausgebildet ist, der sich quer zur Bewegungsrichtung (B) erstreckt.

15. Airbagmodul nach Anspruch 14, **dadurch gekennzeichnet, dass** sich entlang des Randes (22) der Ausnehmung (21) eine weitere Ausnehmung (23) in Form eines den Ring (16) unterbrechenden Spaltes erstreckt.

16. Airbagmodul nach einem der vorangegangenen Ansprüche, **dadurch gekennzeichnet, dass** das bewegbare Element (16) mittels einer Bewegungserzeugungsvorrichtung (17) bewegbar ist.

17. Airbagmodul nach Anspruch 16, **dadurch gekennzeichnet, dass** die Bewegungserzeugungsvorrichtung (17) einen Kolben (20) aufweist, der zum Verschieben des Ringes (16) entlang der Bewegungsrichtung (B) gegen den Rand (22) der Ausnehmung (21) drückt.

18. Airbagmodul nach einem der Ansprüche 1 bis 10, **dadurch gekennzeichnet, dass** die Wandung (15') gasundurchlässig ausgebildet ist.

19. Airbagmodul nach einem der vorangegangenen Ansprüche, **dadurch gekennzeichnet, dass** der Randbereich (3a) der Einströmöffnung (3) des Gassackes (1) mittels eines Klemmringes (30) am Randbereich (12a) der Wandung (15, 15') festgelegt ist.

20. Airbagmodul nach Anspruch 19, **dadurch gekennzeichnet, dass** der Klemmring (30) zumindest ein entlang der Hauptentfaltungsrichtung (H) abragendes Befestigungselement (11 b) aufweist.

21. Airbagmodul nach einem der vorangegangenen Ansprüche, **dadurch gekennzeichnet, dass** die Wandung (15, 15') einstückig mit dem Generatorträger (12) ausgebildet ist.

22. Airbagmodul nach einem der Ansprüche 1 bis 20, **dadurch gekennzeichnet, dass** die Wandung (15, 15') als Teil eines Untermoduls lösbar am Generatorträger (12) festlegbar ist.

23. Airbagmodul nach Anspruch 16 und 22 oder nach Anspruch 17 und 22, **dadurch gekennzeichnet, dass** das Untermodul die Bewegungserzeugungsvorrichtung (17) umfasst.

24. Airbagmodul nach Anspruch 22 oder 23, **dadurch gekennzeichnet, dass** das Untermodul das bewegbare Element (16) umfasst.

25. Airbagmodul nach Anspruch 20 und einem der Ansprüche 22 bis 24, **dadurch gekennzeichnet, dass** die Wandung (15, 15') mittels des Befestigungselementes (11b) am Boden (12e) des Generatorträgers (12) festgelegt ist.

26. Airbagmodul nach Anspruch 20, **dadurch gekennzeichnet, dass** der Gasgenerator (8) mittels des Befestigungselementes (11b) am Boden (12e) des Generatorträgers (12) festgelegt ist.

27. Airbagmodul nach Anspruch 20, **dadurch gekennzeichnet, dass** das Befestigungselement (11b) zum Festlegen des Gassackes (1) am Randbereich (12a) der Wandung (15, 15') entlang der Hauptentfaltungsrichtung (H) durch eine Aussparung (3c) des Randbereiches (3a) der Einströmöffnung (3) und durch eine mit dieser Aussparung (3c) fluchtende Durchgangsöffnung (12b) der Wandung (15, 15') geführt ist.

28. Airbagmodul nach Anspruch 27, **dadurch gekennzeichnet, dass** die Durchgangsöffnung (12b) mit einem im Boden (12e) ausgebildeten Loch (13a) fluchtet.

29. Airbagmodul nach Anspruch 28, **dadurch gekennzeichnet, dass** das Befestigungselement (11b) durch das Loch (13a) geführt ist, so dass ein freier Endabschnitt des Befestigungselementes (11b) von einer dem Gassack (1) abgewandten Seite des Bodens (12e) absteht.

30. Airbagmodul nach einem der vorangegangenen Ansprüche, **dadurch gekennzeichnet, dass** der Gasgenerator (8) einen Flansch (8a) zum Befestigen des Gasgenerators (8) am Boden (12e) des Generatorträgers (12) aufweist.

31. Airbagmodul nach Anspruch 30, **dadurch gekennzeichnet, dass** der Flansch (8a) den Gasgenerator (8) im Querschnitt umläuft.

32. Airbagmodul nach Anspruch 30 oder 31, **dadurch gekennzeichnet, dass** der Flansch (8a) zur flächigen Anlage an einem umlaufenden Randbereich der Gasgeneratoraussparung (13c) des Bodens (12e) ausgebildet ist.

33. Airbagmodul nach Anspruch 29, **dadurch gekennzeichnet, dass** der freie Endabschnitt des Befestigungselementes (11b) zum Festlegen des Gasgenerators (8) am Boden (12e) des Generatorträgers (12) entlang der Hauptentfaltungsrichtung (H) durch eine am Flansch (8a) ausgebildete Aussparung (8c) geführt ist.

34. Airbagmodul nach einem der vorangegangenen Ansprüche, **gekennzeichnet durch** eine zweite Abströmöffnung (4) des Gassackes (1), die in einem aufgeblasenen Zustand des Gassackes (1) derart im Innenraum (I) des Airbagmoduls (6) angeordnet ist, dass aus der zweiten Abströmöffnung (4) austretendes Gas in den Außenraum (A) gelangen kann.

35. Airbagmodul nach Anspruch 34, **dadurch gekennzeichnet, dass** die zweite Abströmöffnung (4) derart im Innenraum (I) angeordnet ist, dass aus der zweiten Abströmöffnung (4) austretendes Gas durch den öffenbaren Bereich (10) hindurch in den Außenraum (A) gelangen kann.

36. Airbagmodul nach einem der Ansprüche 1 bis 10und einem der Ansprüche 34 oder 35, **dadurch gekennzeichnet**, das Mittel vorgesehen sind, welche weitestgehend verhindern, dass aus den ersten und zweiten Abströmöffnungen (15a, 4) austretendes Gas in eine entgegengesetzt zur Hauptentfaltungsrichtung (H) orientierte Richtung gelangen kann.

37. Airbagmodul nach einem der vorangegangenen Ansprüche, **dadurch gekennzeichnet, dass** der Gassack (1) zum Ablassen von Gas eine dritte Abströmöffnung (5) aufweist, die bei einem entfalteten Gassack (1) im Außenraum (A) des Airbagmoduls (6) angeordnet ist.

38. Airbagmodul nach Anspruch 37, **dadurch gekennzeichnet, dass** die dritte Abströmöffnung (5) im aufgeblasenen Zustand des Gassackes (1) an einer dem Airbagmodul (6) zugewandten Seite (2) des Gassackes (1) angeordnet ist.

39. Airbagmodul nach Anspruch 37 oder 38, **dadurch gekennzeichnet, dass** der Gassack (1) zum Ablassen von Gas eine weitere dritte Abströmöffnung (5) aufweist, die bei einem entfalteten Gassack (1) im Außenraum (A) des Airbagmoduls (6) angeordnet ist.

40. Airbagmodul nach Anspruch 37 oder 38 und Anspruch 39, **dadurch gekennzeichnet, dass** die weitere dritte Abströmöffnung (5) der dritten Abströmöffnung (5) im aufgeblasenen Zustand des Gassackes (1) quer zur Hauptentfaltungsrichtung (H) des Gassackes (1) gegenüberliegt.

## Claims

1. An airbag module for a motor vehicle, with
- an airbag (1) which can be inflated with gas in order to protect an occupant, and, upon inflation, moves in a main deployment direction (H) toward the occupant who is to be protected,
- an inflow orifice (3) of the airbag (1), through which the airbag (1) can be inflated with gas,
- a continuously running marginal region (3a), which defines a fictitious surface, of the inflow orifice (3), the fictitious surface forming a plane,
- a gas generator (8), by means of which the gas for inflating the airbag (1) can be generated, this gas emerging from at least one gas outlet orifice of the gas generator (8) and passing through the inflow orifice (3) into the airbag (1), and
- a generator carrier (12) for carrying the gas generator (8), the generator carrier having a base (12e) which extends along the surface defined by the marginal region (3a) of the inflow orifice (3) and to which the gas generator (8) is fastened, the base (12e) separating an inside space (I) of the airbag module (6) counter to the main deployment direction (H) from an outside space (A) surrounding the airbag module (6), the airbag (1) is arranged in its uninflated state in the inside space (I) and the inside space (I) is delimited by a covering (7) of the airbag module (6) in the main deployment direction (H) of the airbag (1), which separates hereby the outside space (A) from the inside space (I) of the airbag module (6), wherein
- the surface (F) defined by the marginal region (3a) of the inflow orifice (3) is spaced apart in the main deployment direction (H) from the base (12e) of the generator carrier (12), and wherein
- a continuously running wall (15, 15') protrudes from the base (12e) along the main deployment direction (H), wherein the marginal region (3a) of the inflow orifice (3) is fixed on the marginal region (12a) of the wall (15, 15'),
**characterized**
- **in that** the wall (15) has at least one first outflow orifice (15a) through which gas emerging from the gas outlet orifice of the gas generator (8) can pass into the outside space (A) of the airbag module (6), whereas the first outflow orifice (15a) is arranged in the inside space (I) of the airbag module (6) in such a way that gas emerging from the first outflow orifice (15a) can pass through an openable region (10) of the covering (7) into the outside space (A), via which the airbag (1) can be deployed into the outside space (A),
- **in that** a movable element (16) in the form of a cylindrical ring with a clearance (16a) being arranged displaceably on the wall (15) in a movement direction (B) running around the wall (15), and whereas
- **in that** the clearance (16a) being able to be brought into congruence with the first outflow orifice (15a) as a result of a displacement of the movable element (16) in the movement direction (B), in order to open the first outflow orifice (15a).

2. The airbag module as claimed in claim 1, **characterized in that** the wall (15, 15') has a marginal region (12a) facing the marginal region (3a) of the inflow orifice (3) in the main deployment direction (H).

3. The airbag module as claimed in claim 2, **characterized in that** the marginal region (12a) of the wall (15, 15') is designed to bear in a sheet-like manner against the marginal region (3a) of the inflow orifice (3).

4. The airbag module as claimed in one of the preceding claims, **characterized in that** the surface (F) forms a plane.

5. The airbag module as claimed in one of the preceding claims, **characterized in that** the airbag (1) is fixed on a component of the airbag module (6) via the marginal region (3a) of the inflow orifice (3).

6. The airbag module as claimed in one of the preceding claims, **characterized in that** the base (12e) has a gas generator clearance (13c) for receiving the gas generator (8).

7. The airbag module as claimed in claim 1 and claim 6, **characterized in that** the wall (15, 15') runs continuously around the gas generator clearance (13c) transversely with respect to the main deployment direction (H).

8. The airbag module as claimed in one of the preceding claims, **characterized in that** the wall (15, 15') is designed in the form of a hollow cylinder.

9. The airbag module as claimed in claim 2 or one of claims 3 to 8 insofar as they refer back to claim 2, **characterized in that** the marginal region (12a) of the wall (15, 15') is of sheet-like and annular design.

10. The airbag module as claimed in claim 2 or one of claims 3 to 9 insofar as they refer back to claim 2, **characterized in that** the marginal region (3a) of the inflow orifice (3) is fixed on the marginal region (12a) of the wall (15, 15').

11. The airbag module as claimed in one of the preceding claims, **characterized in that** the clearance (16a) can be brought out of congruence with the first outflow orifice (15a) as a result of a displacement of the movable element (16) in the movement direction (B), in order to close the first outflow orifice (15a).

12. The airbag module as claimed in one of the preceding claims, **characterized in that** the movable element is designed as a cylindrical ring (16) running continuously in the movement direction (B).

13. The airbag module as claimed in claim 12, **characterized in that**, to displace the ring (16) in the movement direction (B), the ring (16) has a recess (21) with a margin (22) oriented transversely with respect to the movement direction (B).

14. The airbag module as claimed in claim 13, **characterized in that** the recess (21) is designed as a gap which interrupts the ring (16) and which extends transversely with respect to the movement direction (B).

15. The airbag module as claimed in claim 14, **characterized in that** a further recess (23) in the form of a gap interrupting the ring (16) extends along the margin (22) of the recess (21).

16. The airbag module as claimed in one of the preceding claims, **characterized in that** the movable element (16) can be moved by means of a movement generation device (17).

17. The airbag module as claimed in claim 16, **characterized in that** the movement generation device (17) has a piston (20) which presses against the margin (22) of the recess (21) in order to displace the ring (16) in the movement direction (B).

18. The airbag module as claimed in one of claims 1 to 10, **characterized in that** the wall (15') is of gas-impermeable design.

19. The airbag module as claimed in one of the preceding claims, **characterized in that** the marginal region (3a) of the inflow orifice (3) of the airbag (1) is secured on the marginal region (12a) of the wall (15, 15') by means of a clamping ring (30).

20. The airbag module as claimed in claim 19, **characterized in that** the clamping ring (30) has at least one fastening element (11b) protruding in the main deployment direction (H).

21. The airbag module as claimed in one of the preceding claims, **characterized in that** the wall (15, 15') is formed integrally with the generator carrier (12).

22. The airbag module as claimed in one of claims 1 to 20, **characterized in that** the wall (15, 15') can be fixed releaseably as part of a lower module on the generator carrier (12).

23. The airbag module as claimed in claim 16 and 22 or in claim 17 and 22, **characterized in that** the lower module comprises the movement generation device (17).

24. The airbag module as claimed in claim 22 or 23, **characterized in that** the lower module comprises the movable element (16).

25. The airbag module as claimed in claim 20 and one of claims 22 to 24, **characterized in that** the wall (15, 15') is fixed on the base (12e) of the generator carrier (12) by means of the fastening element (11b).

26. The airbag module as claimed in claim 20, **characterized in that** the gas generator (8) is fixed on the base (12e) of the generator carrier (12) by means of the fastening element (11b).

27. The airbag module as claimed in claim 20, **characterized in that**, in order to fix the airbag (1) on the marginal region (12a) of the wall (15, 15'), the fastening element (11b) is guided in the main deployment direction (H) through a clearance (3c) of the marginal region (3a) of the inflow orifice (3) and through a passage hole (12b), aligned with said clearance (3c), of the wall (15, 15').

28. The airbag module as claimed in claim 27, **characterized in that** the passage hole (12b) is aligned with a hole (13a) formed in the base (12e).

29. The airbag module as claimed in claim 28, **characterized in that** the fastening element (11b) is guided through the hole (13a) such that a free end section of the fastening element (11b) protrudes from the base (12e) on a side facing away from the airbag (1).

30. The airbag module as claimed in one of the preceding claims, **characterized in that** the gas generator (8) has a flange (8a) for fastening the gas generator (8) to the base (12e) of the generator carrier (12).

31. The airbag module as claimed in claim 30, **characterized in that** the flange (8a) continuously runs around the gas generator (8) in cross section.

32. The airbag module as claimed in claim 30 or 31, **characterized in that** the flange (8a) is designed for bearing in a sheet-like manner against a continuously running marginal region of the gas generator clearance (13c) of the base (12e).

33. The airbag module as claimed in claim 29, **characterized in that**, in order to fix the gas generator (8) on the base (12e) of the generator carrier (12), the free end section of the fastening element (11b) is guided in the main deployment direction (H) by a clearance (8c) formed on the flange (8a).

34. The airbag module as claimed in one of the preceding claims, **characterized by** a second outflow orifice (4) of the airbag (1), which outflow orifice is arranged, in an inflated state of the airbag (1), in the inside space (I) of the airbag module (6) in such a way that gas emerging from the second outflow orifice (4) can pass into the outside space (A).

35. The airbag module as claimed in claim 34, **characterized in that** the second outflow orifice (4) is arranged in the inside space (1) in such a way that gas emerging from the second outflow orifice (4) can pass through the openable region (10) into the outside space (A).

36. The airbag module as claimed in one of claims 1 to 10 and one of claims 34 or 35, **characterized in that** means are provided which as far as possible prevent the situation where gas emerging from the first and the second outflow orifices (15a, 4) can flow in a direction oriented opposite to the main deployment direction (H).

37. The airbag module as claimed in one of the preceding claims, **characterized in that**, for the discharge of gas, the airbag (1) has a third outflow orifice (5) which, with an airbag (1) deployed, is arranged in the outside space (A) of the airbag module (6).

38. The airbag module as claimed in claim 37, **characterized in that**, in the inflated state of the airbag (1), the third outflow orifice (5) is arranged on a side (2) of the airbag (1) which faces the airbag module (6).

39. The airbag module as claimed in claim 37 or 38, **characterized in that**, for the discharge of gas, the airbag (1) has a further third outflow orifice (5) which, with an airbag (1) deployed, is arranged in the outside space (A) of the airbag module (6).

40. The airbag module as claimed in claim 37 or 38 and claim 39, **characterized in that**, in the inflated state of the airbag (1), the further third outflow orifice (5) lies opposite the third outflow orifice (5) transversely with respect to the main deployment direction (H) of the airbag (1).

## Revendications

1. Module d'airbag pour véhicule automobile, comprenant
- un coussin à gaz (1) qui est gonflable avec du gaz pour la protection d'un passager et qui, lors du gonflage, se déplace le long d'une direction de déploiement principale (H) vers le passager à protéger,
- une ouverture d'entrée (3) du coussin à gaz (1), à travers laquelle le coussin à gaz (1) est gonflable avec du gaz,
- une zone de bordure périphérique (3a), sous-tendant une surface fictive, de l'ouverture d'entrée (3), la surface fictive formant un plan,
- un générateur de gaz (8) au moyen duquel peut être engendré le gaz destiné à gonfler le coussin à gaz (1), ce gaz sortant d'au moins une ouverture de sortie de gaz du générateur de gaz (8) et parvenant dans le coussin à gaz (1) à travers l'ouverture d'entrée (3),
- un porte-générateur (12) pour porter le générateur de gaz (8), qui comprend un fond (12e) s'étendant le long de la surface sous-tendue par la zone de bordure (3a) de l'ouverture d'entrée (3), auquel le générateur de gaz (8) est fixé, dans lequel le fond (12e) sépare une chambre intérieure (I) du module d'airbag (6) au-devant de la direction de déploiement principale (H) d'une chambre extérieure (A) qui entoure le module d'airbag (6), le coussin à gaz (1) étant agencé dans la chambre intérieure (I) dans son état non gonflé, et la chambre intérieure (I) est délimitée, dans la direction de déploiement principale (H) du coussin à gaz (1) par un recouvrement (7) du module d'airbag (6), qui sépare de ce fait la chambre extérieure (A) de la chambre intérieure (I) du module d'airbag (6), et
- la surface (F) sous-tendue par la zone de bordure (3a) de l'ouverture d'entrée (3) est écartée du fond (12e) du porte-générateur (12) le long de la direction de déploiement principale (H), et dans lequel
- une paroi périphérique (15, 15') dépasse depuis le fond (12e) le long de la direction de déploiement principale (H), la zone de bordure (3a) de l'ouverture d'entrée (3) étant fixée à la zone de bordure (12a) de la paroi périphérique (15, 15'),
**caractérisé en ce que**
- la paroi (15) comprend au moins une première ouverture de sortie (15a) à travers laquelle le gaz qui sort de l'ouverture de sortie du générateur de gaz (8) peut parvenir dans la chambre extérieure (A) du module d'airbag (6), la première ouverture de sortie (15a) étant agencée dans la chambre intérieure (I) du module d'airbag (6) de telle manière que du gaz qui sort de la première ouverture de sortie (15a) peut parvenir en traversant une région ouvrable (10) du recouvrement (7) jusque dans la chambre extérieure (A), à travers laquelle le coussin à gaz (1) est susceptible de se déployer dans la chambre extérieure (A) ;
- un élément déplaçable (16) sous la forme d'une bague cylindrique avec un évidement (16a) est agencé contre la paroi (15) avec possibilité de déplacement le long d'une direction de mouvement (B) périphérique vis-à-vis de la paroi (15), et
- l'évidement (16a) peut être amené en concordance avec la première ouverture de sortie (15a) pour ouvrir la première ouverture de sortie (15a) par un déplacement de l'élément déplaçable (16) le long de la direction de mouvement (B).

2. Module d'airbag selon la revendication 1, **caractérisé en ce que** la paroi (15, 15') comprend une zone de bordure (12a) tournée vers la zone de bordure (3a) de l'ouverture d'entrée (3) le long de la direction de déploiement principale (H).

3. Module d'airbag selon la revendication 2, **caractérisé en ce que** la zone de bordure (12a) de la paroi (15, 15') est réalisée en vue de venir en contact à plat contre la zone de bordure (3a) de l'ouverture d'entrée (3).

4. Module d'airbag selon l'une des revendications précédentes, **caractérisé en ce que** la surface (F) forme un plan.

5. Module d'airbag selon l'une des revendications précédentes, **caractérisé en ce que** le coussin à gaz (1) est immobilisé sur un composant du module d'airbag (6) au moyen de la zone de bordure (3a) de l'ouverture d'entrée (3).

6. Module d'airbag selon l'une des revendications précédentes, **caractérisé en ce que** le fond (12e) comprend une échancrure de générateur (13c) pour recevoir le générateur de gaz (8).

7. Module d'airbag selon la revendication 1 et la revendication 6, **caractérisé en ce que** la paroi (15, 15') de l'échancrure de générateur (13c) s'étend périphériquement perpendiculairement à la direction de déploiement principale (H).

8. Module d'airbag selon l'une des revendications précédentes, **caractérisé en ce que** la paroi (15, 15') est réalisée sous forme de cylindre creux.

9. Module d'airbag selon la revendication 2 ou selon l'une des revendications 3 à 8 prise en dépendance de la revendication 2, **caractérisé en ce que** la zone de bordure (12a) de la paroi (15, 15.') et réalisée sous forme d'un anneau à plat.

10. Module d'airbag selon la revendication 2 ou selon l'une des revendications 3 à 9 prise en dépendance de la revendication 2, **caractérisé en ce que** la zone de bordure (3a) de l'ouverture d'entrée (3) est immobilisée sur la zone de bordure (12a) de la paroi (15, 15').

11. Module d'airbag selon l'une des revendications précédentes, **caractérisé en ce que** l'échancrure (16a) peut être amenée hors de concordance avec la première ouverture de sortie (15a) par déplacement de l'élément déplaçable (16) le long de la direction de mouvement (B) pour obturer la première ouverture de sortie (15a).

12. Module d'airbag selon l'une des revendications précédentes, **caractérisé en ce que** l'élément déplaçable est réalisé sous forme d'une bague cylindrique (16) périphérique le long de la direction de mouvement (B).

13. Module d'airbag selon la revendication 12, **caractérisé en ce que** la bague (16) comprend, pour déplacer la bague (16) le long de la direction de mouvement (B), un évidement (21) avec une bordure (22) orientée perpendiculairement à la direction de mouvement (B).

14. Module d'airbag selon la revendication 13, **caractérisé en ce que** l'évidement (21) est réalisé comme une fente qui interrompt la bague (16) et qui s'étend transversalement à la direction de mouvement (B).

15. Module d'airbag selon la revendication de 14, **caractérisé en ce qu'**il est prévu un autre évidement (23) le long de la bordure (22) de l'évidement (21), qui s'étend sous la forme d'une fente qui interrompt la bague (16).

16. Module d'airbag selon l'une des revendications précédentes, **caractérisé en ce que** l'élément déplaçable (16) est déplaçable au moyen d'un dispositif de génération de mouvement (17).

17. Module d'airbag selon la revendication 16, **caractérisé en ce que** le dispositif de génération de mouvement (17) comprend un piston (20) qui pousse contre la bordure (22) de l'évidement (21) pour déplacer la bague (16) le long de la direction de mouvement (B).

18. Module d'airbag selon l'une des revendications 1 à 10, **caractérisé en ce que** la paroi (15') est réalisée imperméable aux gaz.

19. Module d'airbag selon l'une des revendications précédentes, **caractérisé en ce que** la zone de bordure (3a) de l'ouverture d'entrée (3) du coussin à gaz (1) est immobilisée au moyen d'une bague de serrage (3 0) sur la zone de bordure (12a) de la paroi (15, 15').

20. Module d'airbag selon la revendication 19, **caractérisé en ce que** la bague de serrage (30) comprend au moins un élément de fixation (11b) en saillie le long de la direction de déploiement principale (H).

21. Module d'airbag selon l'une des revendications précédentes, **caractérisé en ce que** la paroi (15, 15') est réalisée d'une seule pièce avec le porte-générateur (12).

22. Module d'airbag selon l'une des revendications 1 à 20, **caractérisé en ce que** la paroi (15, 15') est susceptible d'être immobilisée de façon détachable sur le porte-générateur (12) en tant que partie d'un sous-module.

23. Module d'airbag selon les revendications 16 et 22 ou selon les revendications 17 et 22, **caractérisé en ce que** le sous-module inclut le dispositif de génération de mouvement (17).

24. Module d'airbag selon les revendications 22 ou 23, **caractérisé en ce que** le sous-module inclut l'élément déplaçable (16).

25. Module d'airbag selon la revendication 20 est l'une des revendications 22 à 24, **caractérisé en ce que** la paroi (15, 15') est immobilisée sur le fond (12e) du porte-générateur (12) au moyen de l'élément de fixation (11b).

26. Module d'airbag selon la revendication 20, **caractérisé en ce que** le générateur à gaz (8) est immobilisé sur le fond (12e) du porte-générateur (12) au moyen de l'élément de fixation (11b).

27. Module d'airbag selon la revendication 20, **caractérisé en ce que** l'élément de fixation (11b) destiné à immobiliser le coussin à gaz (1) sur la zone de bordure (12a) de la paroi (15, 15') est guidé le long de la direction de déploiement principale (H) par une échancrure (3c) de la zone de bordure (3a) de l'ouverture d'entrée (3) et par une ouverture traversante (12b), en alignement avec cette échancrure (3c), de la paroi (15, 15').

28. Module d'airbag selon la revendication 27, **caractérisé en ce que** l'ouverture traversante (12b) est alignée avec un trou (13a) ménagé dans le fond (12e).

29. Module d'airbag selon la revendication 28, **caractérisé en ce que** l'élément de fixation (11b) est guidé par le trou (13a), de sorte qu'un tronçon terminal libre de l'élément de fixation (11b) dépasse depuis un côté du fond (12e) détourné du coussin à gaz (1).

30. Module d'airbag selon l'une des revendications précédentes, **caractérisé en ce que** le générateur de gaz (8) comprend une bride (8a) pour fixer le générateur de gaz (8) sur le fond (12e) du porte-générateur (12).

31. Module d'airbag selon la revendication 30, **caractérisé en ce que** la bride (8a) entoure le générateur de gaz (8) en section transversale.

32. Module d'airbag selon la revendication 30 ou 31, **caractérisé en ce que** la bride (8a) est réalisée pour venir en contact à plat contre une zone de bordure périphérique de l'échancrure de générateur (13c) du fond (12e).

33. Module d'airbag selon la revendication 29, **caractérisé en ce que** le tronçon terminal libre de l'élément de fixation (11b), pour immobiliser le générateur de gaz (8) sur le fond (12e) du porte-générateur (12), est conduit le long de la direction de déploiement principale (H) par une échancrure (8c) ménagée sur la bride (8a).

34. Module d'airbag selon l'une des revendications précédentes, **caractérisé par** une seconde ouverture de sortie (4) du coussin à gaz (1) qui, dans un état gonflé du coussin à gaz (1) est agencée dans la chambre intérieure (I) du module d'airbag (6) de telle manière que du gaz sortant de la seconde ouverture de sortie (4) peut parvenir dans la chambre extérieure (A).

35. Module d'airbag selon la revendication 34, **caractérisé en ce que** la seconde ouverture de sortie (4) est agencée dans la chambre intérieure (I) de telle manière que du gaz sortant de la seconde ouverture de sortie (4) peut parvenir dans la chambre extérieure (A) en traversant la zone ouvrable (10).

36. Module d'airbag selon l'une des revendications 1 à 10 et l'une des revendications 34 ou 35, **caractérisé en ce qu'**il est prévu des moyens qui empêchent le plus largement possible que du gaz sortant de la première et de la seconde ouverture de sortie (15a, 4) puisse parvenir dans une direction orientée en sens opposé à la direction de déploiement principale (H).

37. Module d'airbag selon l'une des revendications précédentes, **caractérisé en ce que** le coussin à gaz (1) comprend une troisième ouverture de sortie (5), pour laisser sortir du gaz, laquelle est agencée, pour un coussin à gaz déployé (1), dans la chambre extérieure (A) du module d'airbag (6).

38. Module d'airbag selon la revendication 37, **caractérisé en ce que**, dans l'état gonflé du coussin à gaz (1), la troisième ouverture de sortie (5) est agencée sur un côté (2), tourné vers le module d'airbag (6), du coussin à gaz (1).

39. Module d'airbag selon la revendication 37 ou 38, **caractérisé en ce que** le coussin à gaz (1) comprend une autre troisième ouverture de sortie (5), pour laisser sortir du gaz, laquelle est agencée, pour un coussin à gaz déployé (1), dans la chambre extérieure (A) du module d'airbag (6).

40. Module d'airbag selon la revendication 37 ou 38 et la revendication 39, **caractérisé en ce que** l'autre troisième ouverture de sortie (5) est située à l'opposé de la troisième ouverture de sortie (5), dans l'état gonflé du coussin à gaz (1) perpendiculairement à la direction de déploiement principale (H) du coussin à gaz (1).
